# EUROPEAN PATENT APPLICATION

(11) **EP 4 667 183 A1**
(43) Date of publication of application: **24.12.2025**
(21) Application number: 24218101.4
(22) Date of filing: 06.12.2024
(51) Int. Cl.: B29C 44/38, B29C 44/58, B29C 44/02, B29C 44/34, B29C 44/56, B29C 45/00, B29K 105/04

(54) **MOLDING DEVICE AND MOLDING METHOD**

(30) Priority: 20.06.2024 US 202418748126
(71) Applicant: Otrajet Inc., Taichung City 40768 (TW)
(72) Inventor: YEH, Liang-Hui, 402 Taichung City (TW)
(74) Representative: Michalski Hüttermann & Partner Patentanwälte mbB

(57) **Abstract**

A molding device includes a mold, having a mold cavity; a feeding port extending into the mold; a passage coupled to the feeding port and communicable with the mold cavity; and an opening coupled to the passage and communicable with the mold cavity, wherein the feeding port is disposed above the mold cavity, and the opening the disposed at a side of the mold cavity.

## Description

### CROSS-REFERENCE TO RELATED APPLICATION

This application claims priority of U.S. patent application no. 18/748,126 filed on June 20, 2024, which is incorporated by reference in its entirety.

### TECHNICAL FIELD

The present invention is related to a molding device and a molding method thereof; in particular, to a molding device and a molding method thereof suitable for use in injection molding or extrusion molding.

### BACKGROUND

Foamed polymer articles have many advantages, such as high strength, light weight, impact resistance, good sound insulation and thermal insulation, etc. The foamed polymer article can be made into a molded article having a predetermined shape by injection molding or extrusion molding. For example, after the polymer material is melted and mixed with a blowing agent through an injection molding machine to form a mixture, the molten polymer is applied by applying pressure so that it is injected or extruded into the mold cavity of the mold to form the desired foamed polymer article. The properties and applications of foamed polymer articles can be altered by changing the composition of the mixture and adjusting the forming method.

In general, the appearance and physical properties of the foamed polymer articles are directly affected by the forming process, and hence, the design of the mold must consider the fluidity of the mixture so that the mixture can be distributed in the cavity uniformly and rapidly and distribution density of bubble pores in the mixture is high and uniform during the forming process so as to retain the original physical property. Although foamed polymer articles formed using the mold have many advantages and applications, their shortcomings are still the limitations and restrictions that have yet to be broken.

### BRIEF SUMMARY OF THE INVENTION

One purpose of the present invention is to provide a molding device and a molding method.

According to one embodiment of the present disclosure, a molding device is disclosed. The molding device includes a mold and a pressure regulating system. The mold has a mold cavity, a feeding port in communication with the mold cavity, and an inner sidewall defining the mold cavity. The pressure regulating system includes a first gas conduit, a first valve, a pressure sensing unit, a second gas conduit, and a second valve. The first gas conduit is coupled to the mold and in communication with the mold cavity. The first valve is disposed at the first gas conduit and configured to control the injection of gas from a gas source into the mold cavity through the first gas conduit. The pressure sensing unit is configured to sense the pressure in the mold cavity. The second gas conduit is coupled to the mold and in communication with the mold cavity. The second valve is disposed at the second gas conduit and configured to control the discharging of gas from the mold cavity.

According to one embodiment of the present disclosure, a molding method is disclosed. The molding method includes providing a mold, wherein the mold includes a mold cavity, a feeding port in communication with the mold cavity, a junction point in connection with the mold cavity, and an inner sidewall defining the mold cavity; and a sensing the pressure in the mold cavity, and injecting gas into the mold cavity through the junction point until it is sensed that the mold cavity has a first predetermined pressure. The molding method further includes sensing the pressure in the mold cavity, and filing a material from the feeding port into the mold cavity having the first predetermined pressure; and discharging a portion of the gas in the mold cavity through the junction point.

### BRIEF DESCRIPTION OF THE DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
Figure 1 is a schematic diagram of a molding device according to one embodiment of the present invention.
Figure 2 is a schematic diagram of a molding device according to one embodiment of the present invention.
Figure 3 is a schematic diagram of a molding device according to one embodiment of the present invention.
Figure 4 is a schematic diagram of a molding device according to one embodiment of the present invention.
Figure 5 is a top view illustrating a portion of a molding device according to one embodiment of the present invention.
Figure 6 is a flow chart illustrating a molding method according to one embodiment of the present invention.
FIG. 7 is a schematic side view of a molding device in a closed configuration according to one embodiment of the present invention.
FIG. 8 is a schematic cross-sectional view of the molding device of FIG. 7 in the closed configuration.
FIG. 9 is a schematic cross-sectional view of the molding device of FIG. 7 in an open configuration.
FIG. 10 is a schematic top view of the molding device of FIG. 7.
FIG. 11 is a schematic cross-sectional view of the molding device of FIG. 8 along a line AA'.
FIG. 12 is a schematic cross-sectional view of the molding device of FIG. 7 in an open configuration.
FIG. 13 is a schematic side view of a molding device in a closed configuration according to one embodiment of the present invention.
FIG. 14 is a schematic cross-sectional view of the molding device of FIG. 13 in the closed configuration.
FIG. 15 is a schematic cross-sectional view of the molding device of FIG. 13 in an open configuration.
FIG. 16 is a schematic top view of the molding device of FIG. 13.
FIG. 17 is a schematic cross-sectional view of the molding device of FIG. 14 along a line AA'.
FIG. 18 is a schematic cross-sectional view of the molding device of FIG. 13 in an open configuration.
FIG. 19 is a schematic side view of a molding device in a closed configuration according to one embodiment of the present invention.
FIG. 20 is a schematic cross-sectional view of the molding device of FIG. 19 in an open configuration.
FIG. 21 is a schematic top view of the molding device of FIG. 19.
FIG. 22 is a schematic cross-sectional view of the molding device of FIG. 20 along a line AA'.
FIG. 23 is a schematic cross-sectional view of the molding device of FIG. 13 in an open configuration.
FIG. 24 is a schematic side view of a molding device in a closed configuration according to one embodiment of the present invention.
FIG. 25 is a schematic cross-sectional view of the molding device of FIG. 24 in a closed configuration.
FIG. 26 is a schematic cross-sectional view of the molding device of FIG. 24 in an open configuration.
FIG. 27 is a schematic top view of the molding device of FIG. 24.
FIG. 28 is a schematic cross-sectional view of the molding device of FIG. 25 along a line AA'.
FIG. 29 is a schematic cross-sectional view of the molding device of FIG. 24 in an open configuration.
FIG. 30 is a schematic side view of a molding device in a closed configuration according to one embodiment of the present invention.
FIG. 31 is a schematic cross-sectional view of the molding device of FIG. 30 in a closed configuration.
FIG. 32 is a schematic cross-sectional view of the molding device of FIG. 30 in an open configuration.
FIG. 33 is a schematic top view of the molding device of FIG. 30.
FIG. 34 is a schematic cross-sectional view of the molding device of FIG. 31 along a line AA'.
FIG. 35 is a schematic cross-sectional view of the molding device of FIG. 30 in an open configuration.
FIG. 36 is a flow chart illustrating a molding method according to one embodiment of the present invention.
FIGS. 37 to 41 and 43 are schematic cross-sectional views illustrating exemplary stages in the molding method of FIG. 36 according to one embodiment of the present disclosure.
FIGS. 42 and 44 to 51 are schematic isometric views of a foamed member manufactured by the molding method of FIG. 36.
FIGS. 52 to 55 are schematic cross-sectional views illustrating exemplary stages in the molding method of FIG. 36 according to one embodiment of the present disclosure.
FIGS. 56 to 58 are schematic isometric views of a foamed member manufactured by the molding method of FIG. 36.
FIGS. 59 to 62 are schematic cross-sectional views illustrating exemplary stages in the molding method of FIG. 30 according to one embodiment of the present disclosure.
FIGS. 63 to 65 are schematic isometric views of a foamed member manufactured by the molding method of FIG. 36.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages such as those for quantities of materials, durations of times, temperatures, operating conditions, ratios of amounts, and the likes thereof disclosed herein should be understood as modified in all instances by the term "about." Accordingly, unless indicated to the contrary, the numerical parameters set forth in the present disclosure and attached claims are approximations that can vary as desired. At the very least, each numerical parameter should be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

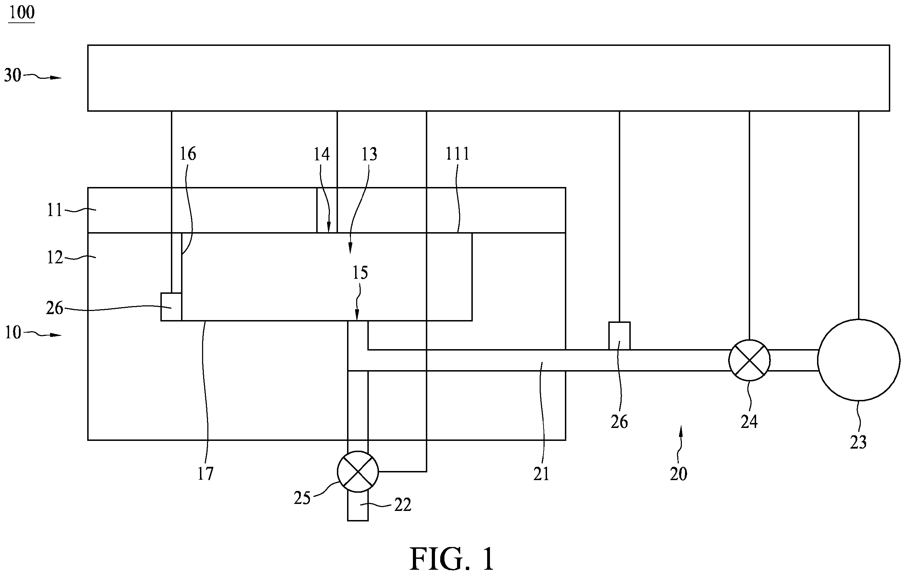

Figure 1 is a schematic diagram of a first molding device 100 according to one embodiment of the present invention. The molding device 100 includes a mold 10 and a pressure regulating system 20. The mold 10 has a mold cavity 13, a feeding port 14 in communication with the mold cavity 13, and an inner sidewall 16 defining the mold cavity 13. In some embodiments, the mold 10 has a junction point 15 in connection with the mold cavity 13. In some embodiments, the inner sidewall 16 of the mold cavity 13 has the junction point 15. The mold cavity 13 is configured to accommodate a material and allows the material to be made into a molded article having predetermined shape by mold forming. In some embodiments, the feeding port 14 is coupled with an injection molding machine or extrusion molding machine, so that the material may be injected/extruded into the mold cavity 13 from the injection molding machine or extrusion molding machine and formed the predetermined shape therein. In some embodiments, the junction point 15 is configured to allow a fluid or gas to enter into or exit from the mold cavity 13.

The pressure regulating system 20 includes a first gas conduit 21, a second gas conduit 22, a gas source 23, a first valve 24, a second valve 25, and a pressure sensing unit 26. One end of the first gas conduit 21 is coupled to the junction point 15, and the other end thereof is coupled to the gas source 23. In some embodiments, the gas source 23 is configured to supply a fluid or gas, in which a suitable fluid or gas may be supplied depending on the needs; for example, the fluid or gas may be air, inert gas, etc., yet the present invention is not limited thereto.

In some embodiments, the mold 10 includes a first mold base 11 and a second mold base 12, wherein the second mold base 12 and the first mold base 11 match each other and define the mold cavity 13 between the first mold base 11 and the second mold base 12. In some embodiments, the feeding port 14 is disposed at the first mold base 11. In some embodiments, the junction point 15 is disposed at the second mold base 12.

The location, shape and number of the junction point 15 are not particularly limited, and may be adjusted depending on the needs. In some embodiments, the junction point 15 is a hole. In some embodiments, the junction point 15 is disposed at the inner sidewall 16 or the inner bottom wall 17 of the second mold base 12 and penetrates the second mold base 12. In some embodiments, the junction point 15 is configured to intake gas and discharge gas, wherein when the first valve 24 is open and the second valve 25 is closed, the junction point 15 is configured to intake gas; when the first valve 24 is closed and the second valve 25 is open, the junction point 15 is configured to discharge gas. In some embodiments, the junction point 15 is not configured to intake and discharge gas simultaneously. In some embodiments, the junction point 15 is configured to supply gas and discharge gas, wherein when the first valve 24 is open and the second valve 25 is closed, the fluid or gas is supplied to the mold cavity 13; when the first valve 24 is closed and the second valve 25 is open, at least a portion of the fluid or gas in the mold cavity 13 is discharged.

The location, shape and number of the feeding port 14 are not particularly limited, and may be adjusted depending on the needs. In some embodiments, the feeding port 14 is disposed at the inner top wall 111 or the inner sidewall 16 of the first mold base 11 and penetrates the first mold base 11. In some embodiments, the feeding port 14 and the junction point 15 are disposed oppositely with respect to the mold cavity 13; as an example but not limitation, the feeding port 14 is disposed at the inner top wall 111 of the first mold base 11, and the junction point 15 is disposed at the inner bottom wall 17 of the second mold base 12. In some embodiments, the feeding port 14 is disposed at the inner top wall 111 of the first mold base 11, and the junction point 15 is disposed at the inner sidewall 16 of the second mold base 12. In some embodiments, the feeding port 14 is disposed at the inner sidewall of the first mold base 11, and the junction point 15 is disposed at the inner sidewall 16 of the second mold base 12 and is located at another side opposite to the feeding port 14. In some embodiments, the feeding port 14 is away from the junction point 15.

The first valve 24 is disposed at the first gas conduit 21 and is configured to control whether the gas from the gas source 23 enters the mold cavity 13 through the first gas conduit 21 and the junction point 15. The second gas conduit 22 is coupled to the junction point 15. The second valve 25 is disposed at the second gas conduit 22 and is configured to control whether the gas from the mold cavity 13 is discharged via the junction point 15 through the second gas conduit 22.

In some embodiments, one end of the second gas conduit 22 is coupled to the first gas conduit 21 through the first gas conduit 21 coupled to the junction point 15. In some embodiments, the other end of the second gas conduit 22 is in communication with the space with a pressure lower than the pressure in the mold cavity; for example, an external environment or a negative pressure space; however, the present invention is not limited thereto. The location at which the second gas conduit 22 connects with the first gas conduit 21 is not particularly limited; for example, the two may be connected at one end in adjacent to an end where the first gas conduit 21 connects with the junction point 15. In some embodiments, the first valve 24 is disposed between the gas source 23 and the second gas conduit 22. In this way, when the gas is to be discharged from the mold cavity 13, the first valve 24 is closed and the second valve 25 is open, so that the gas enters the second gas conduit 22 from the junction point 15. When the gas is to enter the mold cavity 13, the second valve 25 is closed and the first valve 24 is open, so that the gas enters the first gas conduit 21 from the gas source 23 and then enters the mold cavity 13 via the junction point 15. In some embodiments, the first valve 24 and the second valve 25 are not open simultaneously.

The pressure sensing unit 26 is configured to sense the pressure in the mold cavity 13. In some embodiments, the properties of foamed polymers are affected by the pore size and distribution across the polymer, whereas the pore size and distribution are related to the temperature, pressure, and feeding rate. The pressure sensing unit 26 is not limited to any particular type, as long as it can sense the pressure and provide pressure information after sensing the pressure in the mold cavity 13. The pressure regulating system 20 changes the condition at which the gas exits from/enters into the mold cavity 13 in accordance with the pressure information, so as to adjust the pressure in the mold cavity 13, so that the mold forming articles thus obtained have the desired predetermined shape and property.

In some embodiments, the pressure sensing unit 26 is disposed in the mold cavity 13. In some embodiments, the pressure sensing unit 26 is disposed at the inner sidewall 16, the first gas conduit 21 or the second gas conduit 22. In some embodiments, the pressure sensing unit 26 is disposed at the inner sidewall 16 of the mold cavity 13 and is away from the feeding port 14. In some embodiments, the pressure regulating system 20 has a plurality of pressure sensing units 26, the number and location of the plurality of pressure sensing units 26 are not particularly limited; for example, they can be arranged at the inner sidewall 16 of the mold cavity 13 and spaced from each other, and/or anywhere in the first gas conduit 21, and/or anywhere in the second gas conduit 22; however, the present invention is not limited thereto.

In some embodiments, the molding device 100 further includes a control system 30. The control system 30 is configured to control the pressure regulating system 20 and the pressure of the mold cavity 13. In some embodiments, the pressure sensing unit 26 provides the pressure information to the control system 30, and the control system 30 adjusts the first valve 24 and the second valve 25 in accordance with the pressure information. In some embodiments, the control system 30 adjusts the condition at which the gas enters into/exits from the mold cavity 13 in real time, in accordance with the pressure information, so that during the mold forming process, the pressure in the mold cavity 13 is within a suitable or predetermined pressure range at any time. In some embodiments, the control system 30 further controls the feeding condition of the feeding port 14 and the gas supply condition of the gas source 23. In some embodiments, the control system 30 and the first valve 24, the second valve 25, the pressure sensing unit 26 and the feeding port 14 are electrically connected.

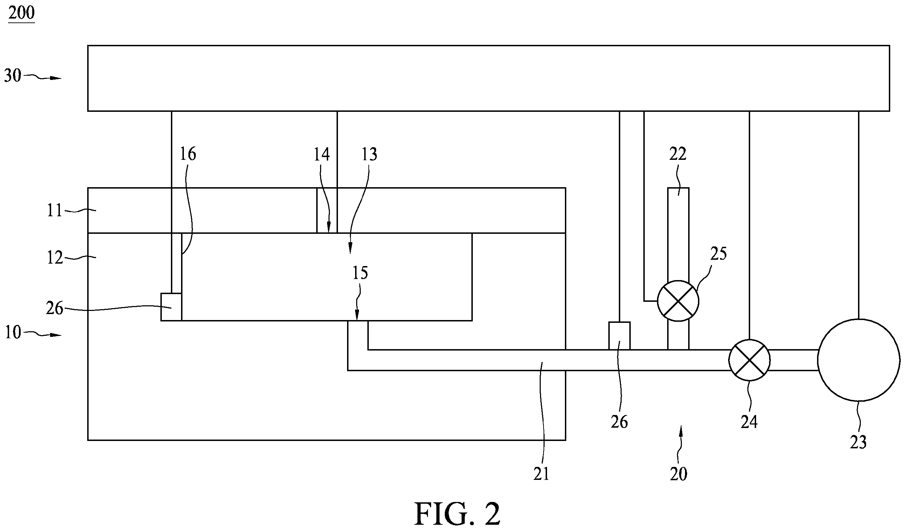

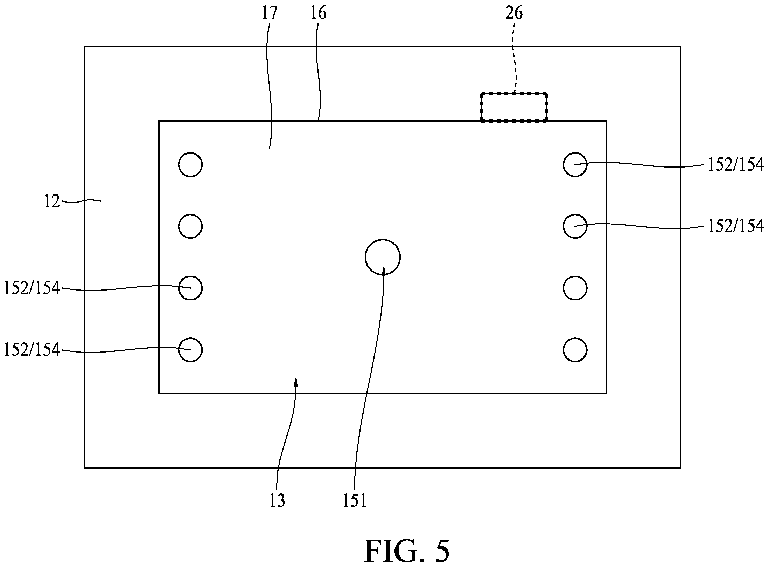

Figure 2 to Figure 4 are schematic diagrams of molding devices according to embodiments of the present invention, and Figure 5 is a top view illustrating a portion of a molding device according to one embodiment of the present invention; these drawings are used to illustrate embodiments of different configurations of the junction point 15, the first gas conduit 21 and the second gas conduit 22, and the way how the junction point 15 is configured corresponding the first gas conduit 21 and the second gas conduit 22 of various configurations. In some embodiments, the second molding device 200 shown in Figure 2 is similar to the first molding device 100 shown in Figure 1. In some embodiments, as shown in Figure 2, the second gas conduit 22 of the second molding device 200 is connected to the middle part of the first gas conduit 21. In some embodiments, the second gas conduit 22 is connected to the first gas conduit 21 at a location closer to the end where the first gas conduit 21 is connected to the gas source.

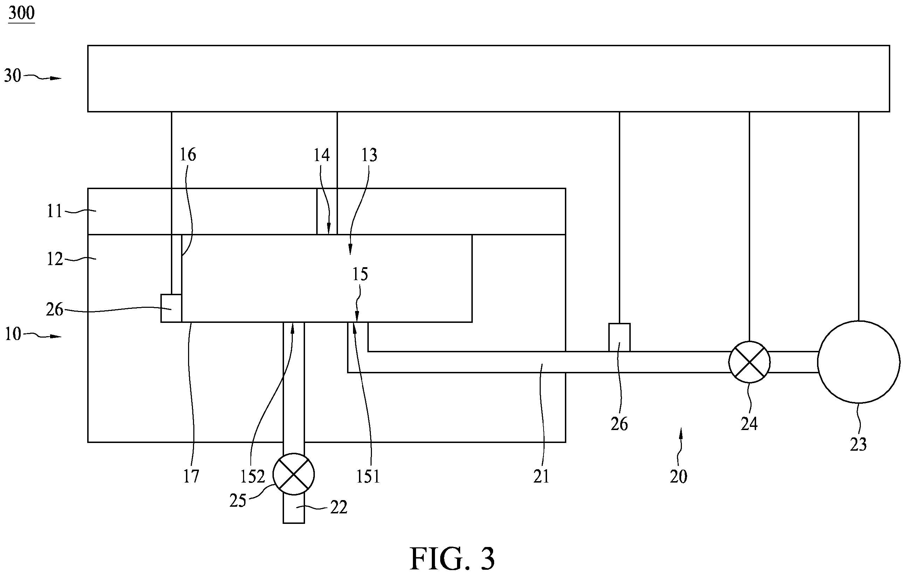

In some embodiments, the third molding device 300 shown in Figure 3 is similar to the first molding device 100 shown in Figure 1. In some embodiments, as shown in Figure 3, the junction point 15 of the third molding device 300 is a hole, which includes a first opening 151 and a second opening 152, wherein the first opening 151 is the connection with the first gas conduit 21, and the second opening 152 is the connection with the second gas conduit 22. In some embodiments, the first opening 151 is configured to intake gas, and the second opening 152 is configured to discharge gas. The locations of the first opening 151 and the second opening 152 are not particularly limited, as long as they are separated from each other. In some embodiments, the first opening 151 is away from the second opening 152. In some embodiments, the first opening 151 and the second opening 152 are disposed oppositely with respect to the feeding port 14. In some embodiments, the first opening 151 and the second opening 152 are disposed at the bottom surface 17 of the mold cavity 13. In some embodiments, the first opening 151 and the second opening 152 are disposed at the inner sidewall 16 of the mold cavity 13.

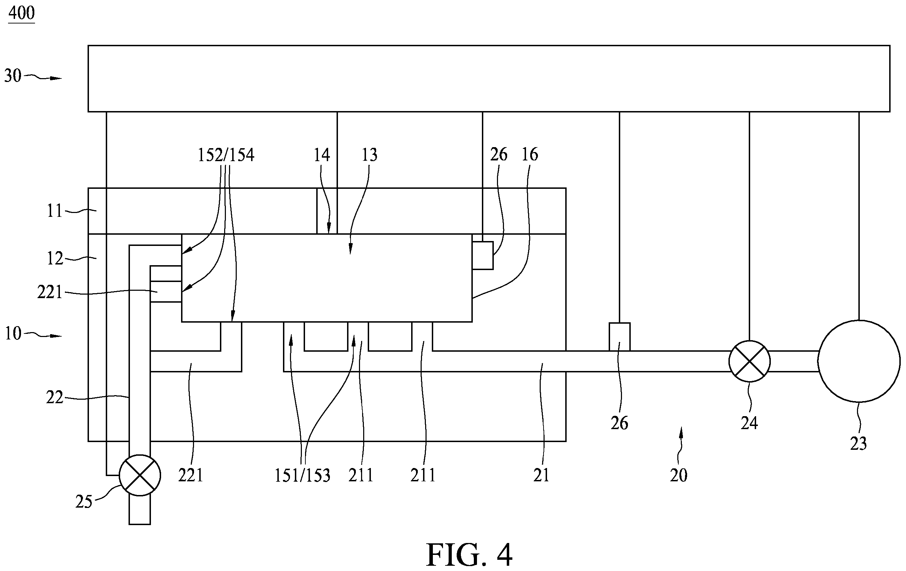

In some embodiments, the fourth molding device 400 shown in Figure 4 is similar to the third molding device 300 shown in Figure 3. In some embodiments, as shown in Figure 4, the first opening 151 of the fourth molding device 400 has a plurality of first pores 153, and the second opening 152 has a plurality of second pores 154. In some embodiments, the plurality of first pores 153 are respectively connected with the first gas conduit 21, whereas the plurality of second pores 154 are respectively connected with the second gas conduit 22. In some embodiments, the number of second pores 154 is greater than the number of the first pores 153. The locations of the plurality of first pores 153 and the plurality of second pores 154 are not particularly limited; they can be disposed alternately or at different regions in the mold cavity 13, respectively. In some embodiments, an end at which the first gas conduit 21 connects with the mold cavity 13 have a plurality of first guiding channels 211, wherein each first guiding channel 211 is connected to a corresponding first pore 153 and the first gas conduit 21. In some embodiments, an end at which the second gas conduit 22 connects with the mold cavity 13 has a plurality of second guiding channels 221, wherein each second guiding channel 221 is connected to a corresponding second pore 154 and the second gas conduit 22.

In some embodiments, as shown in Figure 5, the first opening 151 of the fourth molding device 400 is disposed at middle of the mold cavity, and the second opening 152 is disposed at the periphery of the mold cavity. In some embodiments, the plurality of second pores 154 surrounds the first opening 151. In some embodiments, the first hole 151 and the plurality of second pores 154 are disposed at the bottom surface 17 of the mold cavity 13. In some embodiments, the diameter of each second pore 154 is smaller of the diameter of the first hole 151.

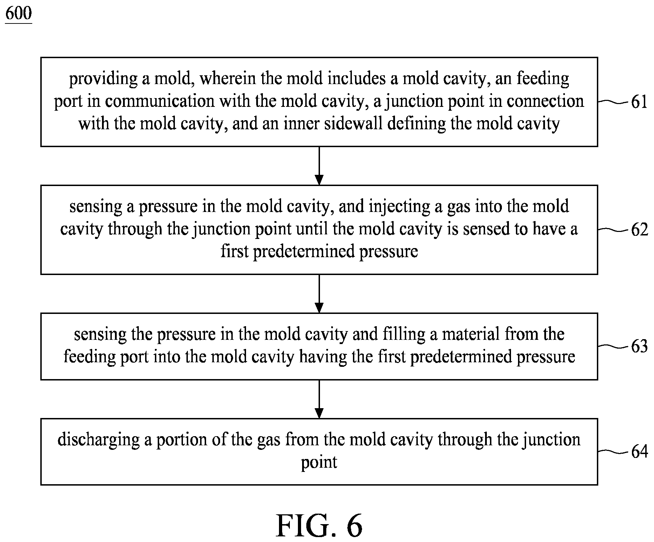

Figure 6 is a flow chart illustrating a molding method according to one embodiment of the present invention. In some embodiments, as shown in Figure 6, the molding method 600 includes the following steps.

Step 61: providing a mold, wherein the mold includes a mold cavity, a feeding port in communication with the mold cavity, a junction point in connection with the mold cavity, and an inner sidewall defining the mold cavity.

Step 62: sensing the pressure in the mold cavity, and injecting gas into the mold cavity through the junction point until it is sensed that the mold cavity has a first predetermined pressure.

Step 63: sensing the pressure in the mold cavity, and filling a material into the mold cavity having the first predetermined pressure from the feeding port.

Step 64: discharging a portion of the gas in the mold cavity through the junction point.

The molding method is not limited to the above-mentioned embodiments. In some embodiments, the molding method 600 uses any of the above-mentioned molding devices 100, 200, 300, 400 as shown in Figure 1 to Figure 5.

In some embodiments, the molding method 600 includes step 61: providing a mold 10, wherein the mold 10 includes a mold cavity 13, a feeding port 14 in communication with the mold cavity, and a junction point 15 in communication with the mold cavity. In some embodiments, the mold 10 is the mold 10 of any of the molding devices 100, 200, 300, 400 as shown in Figure 1 to Figure 5.

In some embodiments, at the beginning of step 62, the pressure sensing unit 26 senses that the pressure in the mold cavity 13 is the atmospheric pressure. In some embodiments, in step 62, the first valve 24 is opened so that the gas is injected into the mold cavity 13 from the gas source 23 through the first gas conduit 21 and the junction point 15. In some embodiments, during the process of injecting the gas into the mold cavity 13, the pressure in the mold cavity 13 is sensed continuously. In some embodiments, when the first valve 24 is open, the second valve 25 is closed so that the gas is injected into the mold cavity 13 from the first gas conduit 21. In some embodiments, the pressure sensing unit 26 continuously senses the pressure in the mold cavity, and the gas is injected into the mold cavity 13 until it is senses that the mold cavity 13 has a first predetermined pressure; then, the first valve 24 is closed, and the gas injection into the mold cavity 13 is stopped. In some embodiments, the first predetermined pressure is greater than the atmospheric pressure. In some embodiments, the first predetermined pressure is less than the atmospheric pressure.

In some embodiments, the gas is any suitable gas depending on the need; for example, air; however, the present invention is not limited thereto.

In some embodiments, in step 63, during the process of filling the material into the mold cavity 13, the pressure sensing unit 26 continuously senses the pressure in the mold cavity 13. In some embodiments, the material is injected into the mold cavity 13 from the feeding port 14, thereby increasing the pressure in the mold cavity 13. In some embodiments, the pressure in the mold cavity 13 is raised from the first predetermined pressure. In some embodiments, the pressure in the mold cavity 13 is raised from the first predetermined pressure to a second predetermined pressure.

In some embodiments, the material includes a mixture. In some embodiments, the mixture includes a high molecular weight polymer and a blowing agent. In some embodiments, the blowing agent is a physical or chemical additive that releases gas during the heating process, thereby forming pores. Since the gasification process of physical or chemical additive is very rigorous, and the temperature distribution across the foamed polymer articles is not uniform, the thus-obtained foamed polymer articles have a flat shape and have larger pores. However, the present molding method may sense and adjust the pressure in the mold cavity 13 at any time, and the thus-obtained foamed polymer articles may have a substantially increased thickness and have pores that are more uniformly distributed and dense. In some embodiments, the blowing agent is a physical additive. In some embodiments, the blowing agent is a supercritical fluid (SCF).

In some embodiments, the first predetermined pressure and the second predetermined pressure may be adjusted depending on the characteristics of the material. For materials with lower strength, the first predetermined pressure is higher, and for materials with higher strength, the first predetermined pressure is lower. In some embodiments, after the material is filled into the mold cavity 13 having the first predetermined pressure, the pressure in the mold cavity 13 increases, and therefore, the setting of a second predetermined pressure is to ensure that the mold cavity is kept within a suitable pressure range. In some embodiments, when the mold cavity 13 has the second predetermined pressure, stops filling the material into the mold cavity 13.

In some embodiments, step 64 involves discharging the portion of the gas in the mold cavity after injecting the gas into the mold cavity 13 and the completion of the filing of the material into the mold cavity 13. In some embodiments, in step 64, the second valve 25 is open and the first valve 24 is closed, so that the gas enters the second gas conduit 22, thereby discharging the gas from the mold cavity 13.

In some embodiments, when it is sensed that the pressure in the mold cavity 13 is greater than the second predetermined pressure, a portion of the gas in the mold cavity 13 is discharged through the junction point 15 until the pressure in the mold cavity 13 is kept within a predetermined pressure range. In some embodiments, the predetermined pressure range is between the first predetermined pressure and the second predetermined pressure.

In some embodiments, the process during which the material is filled into the mold cavity 13 having the first predetermined pressure from the feeding port 14 till the completion of the filling of the material lasts only 0.5 to 1 second, and hence, during the filling period, the pressure in the mold cavity 13 changes rapidly. During the filling period or at the moment of the completion of the filling, the pressure in the mold cavity 13 is sensed by the pressure sensing unit 26 in real time, and the pressure information is provided, so that the pressure regulating system 20 can adjust the status of the gas entering into or exiting from the mold cavity 13 in accordance with the pressure information, and hence, the pressure in the mold cavity 13 can be kept within the predetermined pressure range between the first predetermined pressure.

In some embodiments, the present method further includes using the control system 30 to control the injection of the gas into the mold cavity 13 and to control the discharging of a portion of the gas in the mold cavity 13, in accordance with the pressure in the mold cavity 13 sensed by the pressure sensing unit 26. In some embodiments, the control system 30 receives the pressure information provided by the pressure sensing unit 26, and controls the on/off status of the first valve 24 and the second valve 25 and controls the material feeding condition of the feeding port 14 (including but not limited to, the feeding time, feeding rate, etc. of the feeding port 14) in accordance with the pressure information.

In view of the foregoing, the present molding device and molding method, by using the molding device comprising the mold and the pressure regulating system coupled with the mold, wherein the pressure regulating system includes the pressure sensing unit configured to sense the pressure in the mold cavity, provide the mold cavity having a first predetermined pressure before feeding and allow for the real-time adjustment of the pressure in the mold cavity in accordance with the feeding condition and the sensing result of the pressure sensing unit when operating the molding method of the present invention, so that the mold forming articles thus manufactured have a satisfactory appearance and quality.

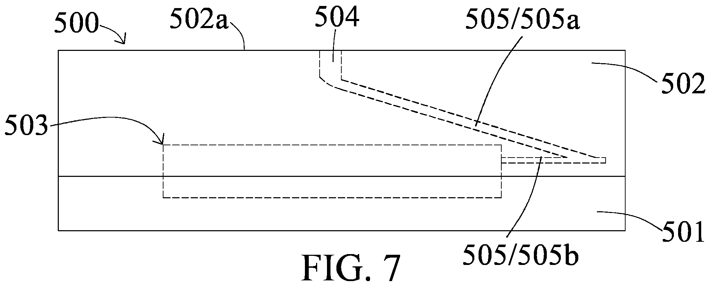

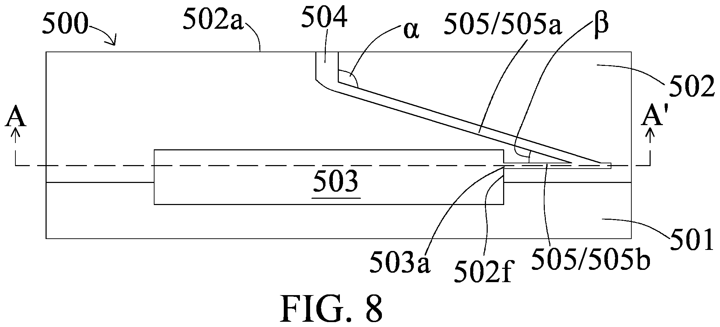

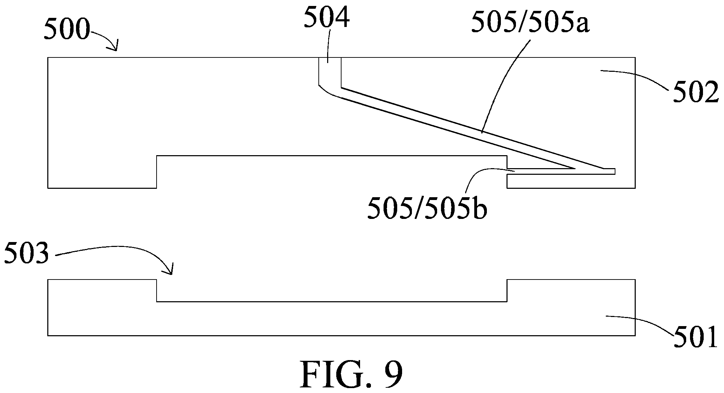

FIG. 7 is a schematic side view of a molding device 500 according to one embodiment of the present invention, FIG. 8 is a schematic cross-sectional view of the molding device 500 in a closed configuration, and FIG. 9 is a schematic cross-sectional view of the molding device in an open configuration. The molding device 500 includes a mold having a first mold 501 and a second mold 502 disposed over the first mold 501. The first mold 501 is engageable with the second mold 502. The first mold 501 engages with the second mold 502 when the molding device 500 is in the closed configuration, as shown in FIGS. 7 and 8. In some embodiments, the first mold 501 is a lower mold, and the second mold 502 is an upper mold.

A mold cavity 503 is defined by the first mold 501 and the second mold 502. The mold cavity 503 is formed when the molding device 500 is in the closed configuration. The mold cavity 503 is configured to receive and hold a mixture flowable into the mold cavity 503. In some embodiments, the mixture including a polymeric material (such as polyurethane (PU), thermoplastic polyurethane (TPU), etc.) and a blowing agent (such as physical blowing agent, for example carbon dioxide, nitrogen, supercritical fluid, etc.) can be injected into the mold cavity 503. The mixture can undergo a foaming process within the mold cavity 503. The mixture inside the mold cavity 503 becomes a foamed article after the foaming process.

The molding device 500 includes a feeding port 504 disposed at the first mold 501 or the second mold 502. The feeding port 504 is configured to receive a discharging channel or an injector of an injection unit. In some embodiments, the discharging channel of the injection unit is engageable with the feeding port 504. In some embodiments, the mixture including the polymeric material and the blowing agent can be injected into the mold cavity 503 when the discharging channel of the injection unit is engaged with the feeding port 504. The mixture can flow from the injection unit to the mold cavity 503 through the feeding port 504. In some embodiments, the feeding port 504 is disposed at a top surface of the first mold 501 or a top surface 502a of the second mold 502. In some embodiments, the feeding port 504 is vertically extended into the first mold 501 or the second mold 502.

The molding device 500 includes a passage 505 disposed at the first mold 501 or the second mold 502. The passage 505 is configured to allow the mixture including the polymeric material and the blowing agent flowing through. The passage 505 connects the feeding port 504 to the mold cavity 503. The passage 505 is communicable with the feeding port 504 and the mold cavity 503. In some embodiments, the passage 505 includes several portions 505a, 505b extending within the first mold 501 or the second mold 502.

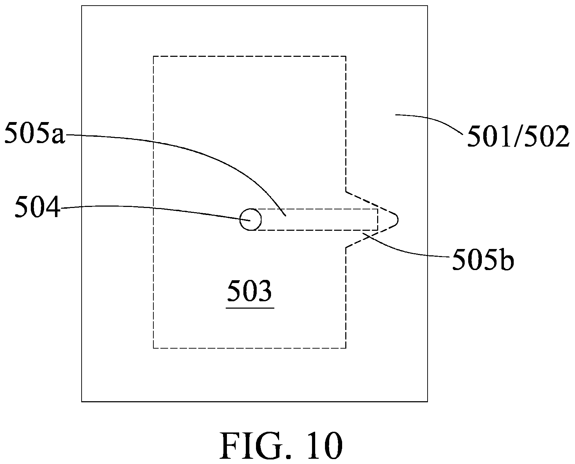

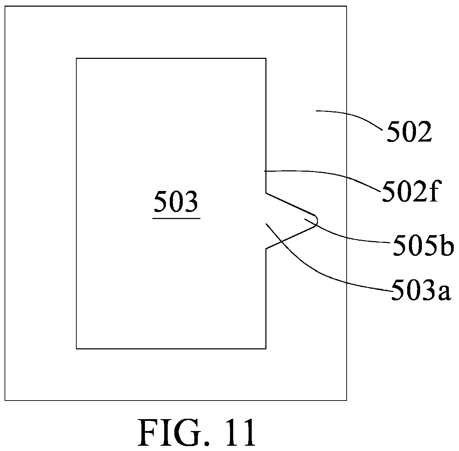

FIG. 10 shows a top view of FIG. 7, and FIG. 11 shows a cross-sectional view along a line AA' of FIG. 8. In some embodiments, the passage 505 includes a first portion 505a and a second portion 505b coupled with the first portion 505a. The mixture can flow from the injection unit into the mold cavity 503 through the discharging channel of the injection unit, the feeding port 504, the first portion 505a and the second portion 505b. In some embodiments, an end of the first portion 505a couples to the feeding port 504, and another end of the first portion 505a coupled to the second portion 505b. In some embodiments, the mixture can flow slantingly along the first portion 505a. In some embodiments, the first portion 505a is not in parallel to the feeding port 504, that there is an angle α between the first portion 505a and the feeding port 504. In some embodiments, the angle α is greater than 90° but less than 180°. In some embodiments, an end of the second portion 505b couples to the first portion 505a, and another end of the second portion 505b couples to the mold cavity 503.

In some embodiments, the second portion 505b extends substantially orthogonal to the feeding port 504. In some embodiments, the second portion 505b extends substantially parallel to the top surface 502a. In some embodiments, there is an angle β between the first portion 505a and the second portion 505b. In some embodiments, the angle β is less than 90°. In some embodiments, the angle α is substantially greater than the angle β. In some embodiments, the second portion 505b is in a tapered configuration, that tapering from the mold cavity 503 toward a periphery of the first mold 501 or the second mold 502. In some embodiments, the second portion 505b is in a flat tapered shape. In some embodiments, a width of an opening 503a along the first mold 501 or the second mold 502 and disposed between the mold cavity 503 and the second portion 505b is substantially greater than a width or a diameter of the first portion 505a. In some embodiments, the width of the opening 503a is substantially greater than a width or a diameter of the feeding port 504. In some embodiments, the opening 503a is disposed at a side of the mold cavity 503. In some embodiments, the opening 503a is disposed at an interior sidewall 502f of the second mold 502. In some embodiments, the interior sidewall 502f is substantially orthogonal to the top surface 502a of the second mold 502.

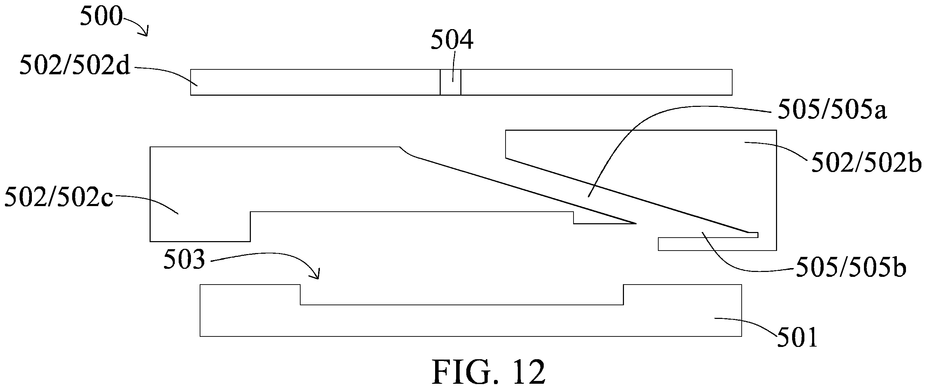

FIG. 12 shows a cross-sectional exploded view of FIG. 9. In some embodiments, the first mold 501 includes several separable parts, and the second mold 502 also includes several separable parts. For simplicity and clarity, only the second mold 502 having separable parts is illustrated and described, but it is understood that the first mold 501 can have similar configuration as the second mold 502. In some embodiments, the second mold 502 can be separated into several parts when the molding device 500 is in the open configuration as shown in FIG. 9 or 12. In some embodiments, the second mold 502 includes a first part 502b, a second part 502c and a third part 502d. The first part 502b, the second part 502c and the third part 502d are separable from each other. In some embodiments, the passage 505 is formed when the first part 502b is engaged with the second part 502c as shown in FIG. 9 or when the molding device 500 is in the closed configuration as shown in FIG. 8. In some embodiments, the first portion 505a and the second portion 505b of the passage 505 are formed when the first part 502b is engaged with the second part 502c. In some embodiments, the first part 502b and the second part 502c are mold parts of the molding device 500.

In some embodiments the second mold 502 includes the third part 502d. In some embodiments, the feeding port 504 is disposed at the third part 502d. In some embodiments, the feeding port 504 extends through the third part 502d. In some embodiments, the feeding port 504 couples to the passage 505 when the first part 502b, the second part 502c and the third part 502d are engaged with each other as shown in FIG. 9 or when the molding device 500 is in the closed configuration as shown in FIG. 8. In some embodiments, the third part 502d is disposed over the first part 502b and the second part 502c. In some embodiments, after the engagement of the first part 502b, the second part 502c and the third part 502d as shown in FIG. 9, the feeding port 504 couples to the passage 505. In some embodiments, when the first part 502b, the second part 502c and the third part 502d are engaged with each other as shown in FIG. 9 or when the molding device 500 is in the closed configuration as shown in FIG. 8, the feeding port 504 is communicable with the mold cavity 503 through the passage 505. As such, the mixture can flow from the feeding port 504 into the mold cavity 503 through the passage 505. In some embodiments, the feeding port 504 can engage with the discharging channel of the injection unit, so that the mixture can be injected from the injection unit into the mold cavity 503 by flowing through the passage 505.

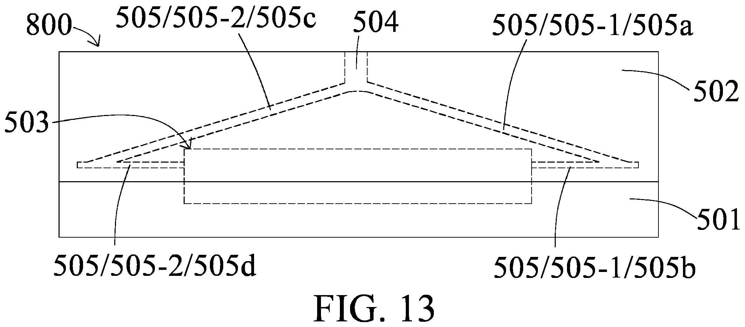

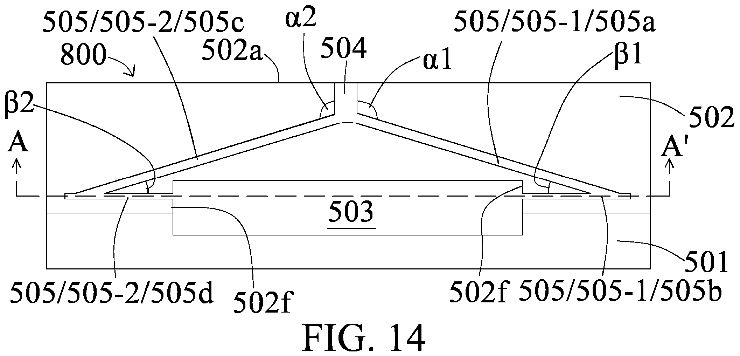

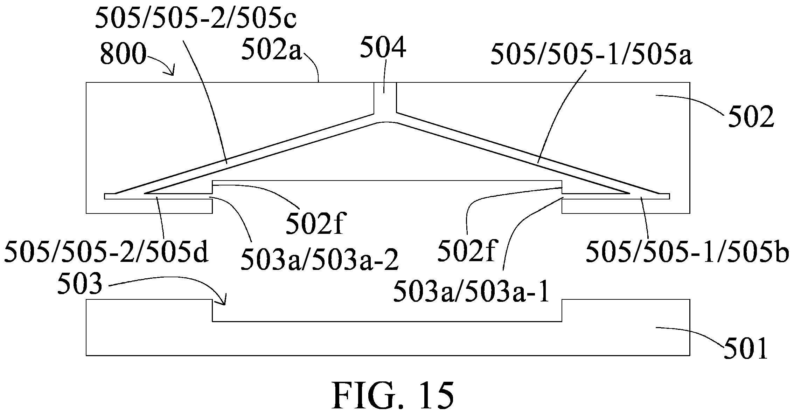

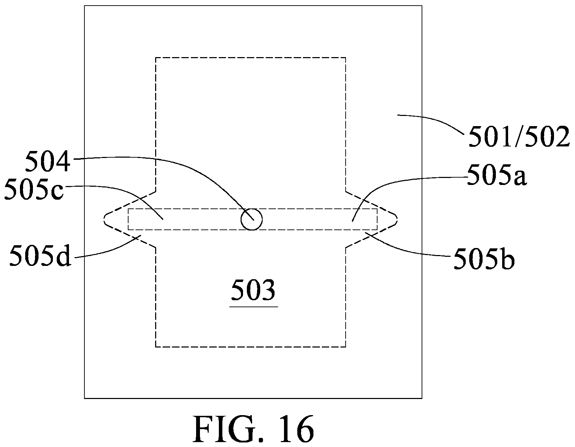

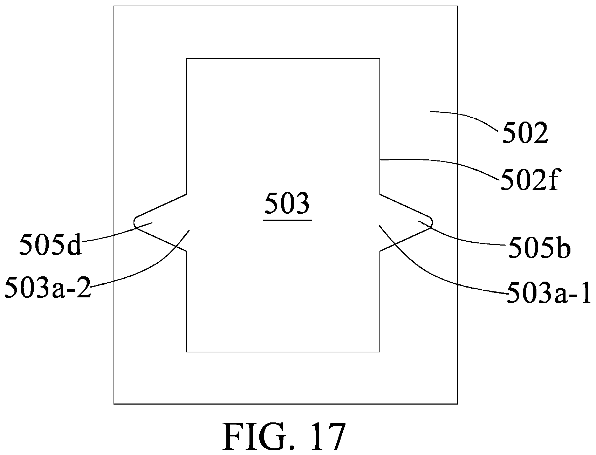

FIG. 13 is a schematic side view of a molding device 800 according to one embodiment of the present invention, FIG. 14 is a schematic cross-sectional view of the molding device 800 in a closed configuration, and FIG. 15 is a schematic cross-sectional view of the molding device 800 in an open configuration. FIG. 16 shows an top view of FIG. 13, and FIG. 17 shows a cross-sectional view along a line AA' of FIG. 14. The molding device 800 is similar to the molding device 500 described above and illustrated in FIGS. 7-11. In some embodiments, the molding device 800 includes more than one passage 505. In some embodiments, the molding device 800 includes a first passage 505-1 and a second passage 505-2 similar to the first passage 505-1. In some embodiments, the first passage 505-1 is configured symmetrically to the second passage 505-2.

In some embodiments, the first passage 505-1 includes the first portion 505a and the second portion 505b, and the second passage 505-2 includes a third portion 505c and a fourth portion 505d. In some embodiments, the first portion 505a is similar to the third portion 505c, the second portion 505b is similar to the fourth portion 505d. In some embodiments, the feeding port 504 couples to the first passage 505-1 and the second passage 505-2. In some embodiments, the mold cavity 503 couples to the first passage 505-1 and the second passage 505-2 through a first opening 503a-1 and a second opening 503a-2 respectively. In some embodiments, the first opening 503a-1 and the second opening 503a-2 are disposed at the interior sidewall 502f of the second mold 502. In some embodiments, the interior sidewall 502f is substantially orthogonal to the top surface 502a of the second mold 502. In some embodiments, a first angle α1 between the feeding port 504 and the first portion 505a is substantially identical to a second angle α2 between the feeding port 504 and the third portion 505c. In some embodiments, a third angle β1 between the first portion 505a and the second portion 505b is substantially identical to a fourth angle β2 between the third portion 505c and the fourth portion 505d. In some embodiments, the mixture can flow from the feeding port 504 to the mold cavity 503 through the first portion 505a and the second portion 505b, and/or through the third portion 505c and the fourth portion 505d.

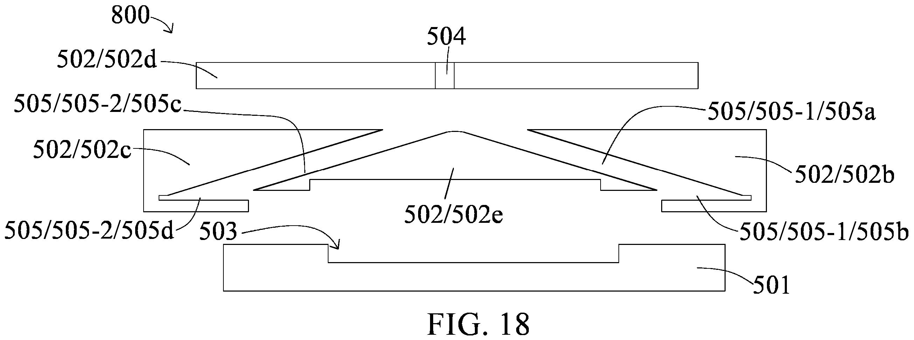

FIG. 18 shows a cross-sectional exploded view of FIG. 15. In some embodiments, the second mold 502 can be separated into several parts when the molding device 800 is in the open configuration as shown in FIG. 15 or 18. In some embodiments, the second mold 502 includes a first part 502b, a second part 502c, a third part 502d and a fourth part 502e. The first part 502b, the second part 502c, the third part 502d and the fourth part 502e are separable from each other. In some embodiments, the first passage 505-1 and the second passage 505-2 are formed when the first part 502b, the second part 502c and the fourth part 502e are engaged with each other as shown in FIG. 15 or when the molding device 800 is in the closed configuration as shown in FIG. 14. In some embodiments, the first portion 505a and the second portion 505b of the first passage 505-1 and the third portion 505c and the fourth portion 505d of the second passage 505-2 are formed when the first part 502b, the second part 502c and the fourth part 502e are engaged with each other. In some embodiments, the first part 502b, the second part 502c, the third part 502d and the fourth part 502e are mold parts of the molding device 800.

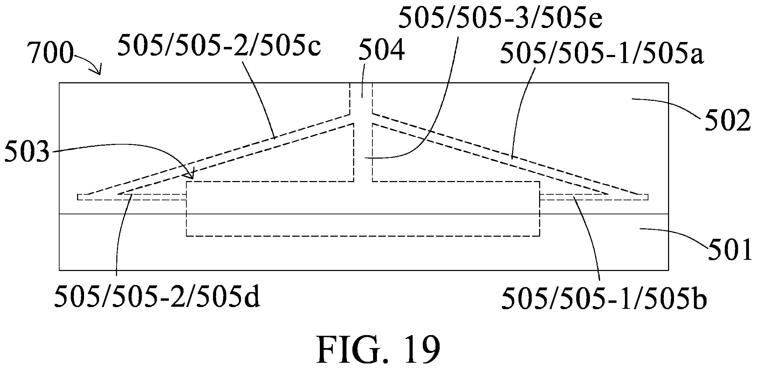

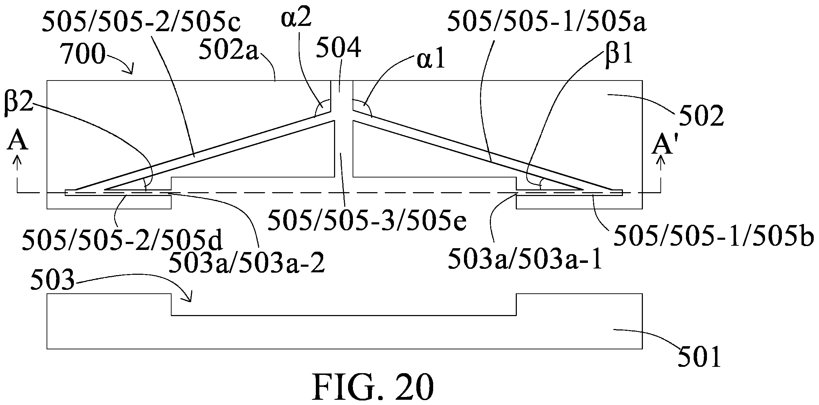

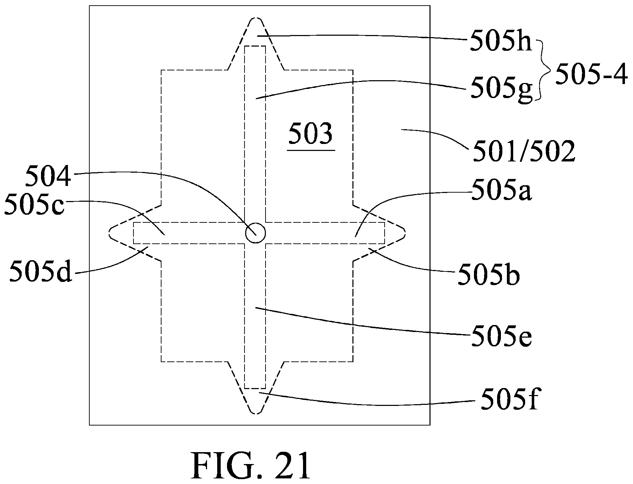

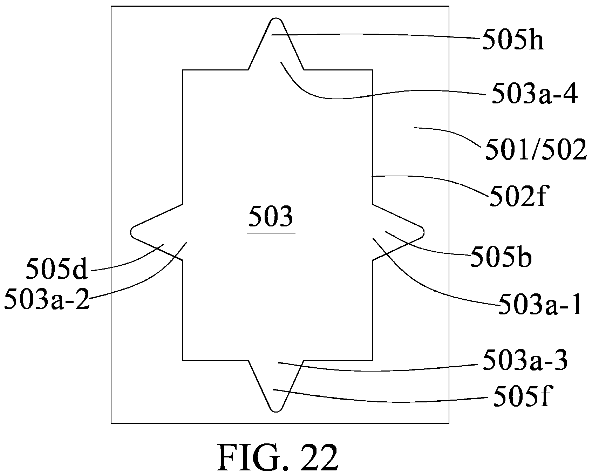

FIG. 19 is a schematic side view of a molding device 700 according to one embodiment of the present invention, FIG. 20 is a schematic cross-sectional view of the molding device 700 in an open configuration. FIG. 21 shows a top view of FIG. 19, and FIG. 22 shows a cross-sectional view along a line AA' of FIG. 20. The molding device 700 is similar to the molding device 500 or 800 described above and illustrated in FIGS. 7-18. In some embodiments, the molding device 700 includes more than one passage 505. In some embodiments, the molding device 700 includes a first passage 505-1, a second passage 505-2, a third passage 505-3 and a fourth passage 505-4. In some embodiments, the first passage 505-1 is configured symmetrically to the second passage 505-2, and the third passage 505-3 is configured symmetrically to the fourth passage 505-4.

In some embodiments, the first passage 505-1 includes the first portion 505a and the second portion 505b, the second passage 505-2 includes a third portion 505c and a fourth portion 505d, the third passage 505-3 includes fifth portion 505c and a sixth portion 505f, and the fourth passage 505-4 includes a seventh portion 505g and an eighth portion 505h. In some embodiments, the first portion 505a, the third portion 505c and the fifth portion 505e are similar to each other, and the second portion 505b, the fourth portion 505d and sixth portion 505f are similar to each other. In some embodiments, the feeding port 504 couples to the first passage 505-1, the second passage 505-2, the third passage 505-3 and the fourth passage 505-4. In some embodiments, the mold cavity 503 couples to the first passage 505-1, the second passage 505-2, the third passage 505-3 and the fourth passage 505-4 through a first opening 503a-1, a second opening 503a-2, a third opening 503a-3 and a fourth opening 503a-4 respectively. In some embodiments, the first opening 503a-1, the second opening 503a-2, the third opening 503a-3 and the fourth opening 503a-4 are disposed at the interior sidewall 502f of the second mold 502. In some embodiments, the interior sidewall 502f is substantially orthogonal to the top surface 502a of the second mold 502.

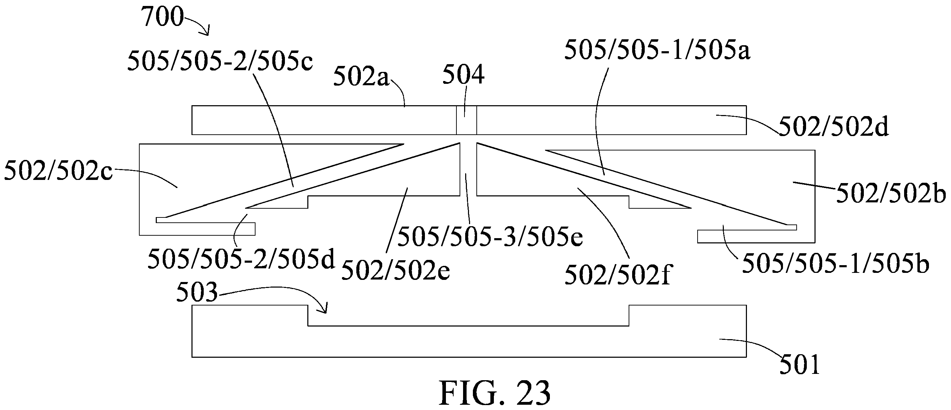

FIG. 23 shows a cross-sectional exploded view of FIG. 20. In some embodiments, the second mold 502 can be separated into several parts when the molding device 700 is in the open configuration as shown in FIG. 20. In some embodiments, the second mold 502 includes a first part 502b, a second part 502c, a third part 502d, a fourth part 502e and a fifth part 502f. The first part 502b, the second part 502c, the third part 502d, the fourth part 502e and the fifth part 502f are separable from each other. In some embodiments, the first passage 505-1, the second passage 505-2, the third passage 505-3 and the fourth passage 505-4 are formed when the first part 502b, the second part 502c, the third part 502d, the fourth part 502e and the fifth part 502f are engaged with each other as shown in FIG. 20 or when the molding device 800 is in the closed configuration as shown in FIG. 19. In some embodiments, the first part 502b, the second part 502c, the third part 502d, the fourth part 502e and the fifth part 502f are mold parts of the molding device 700.

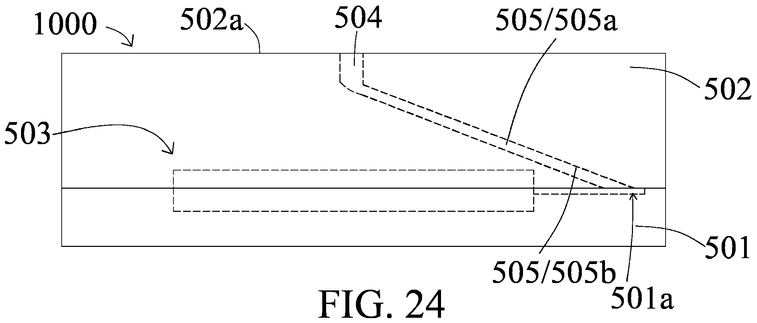

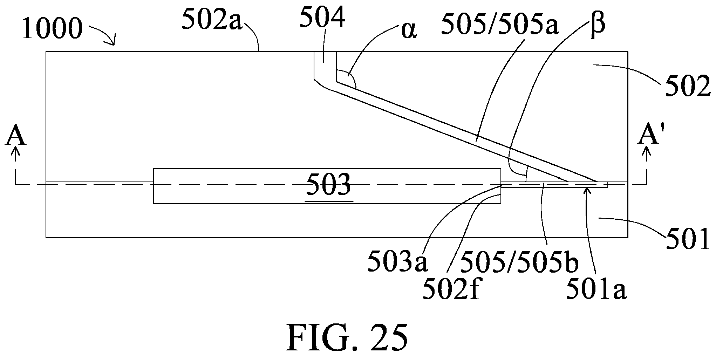

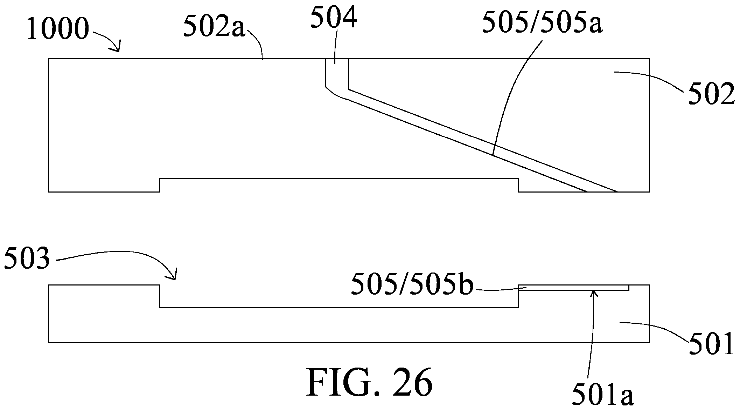

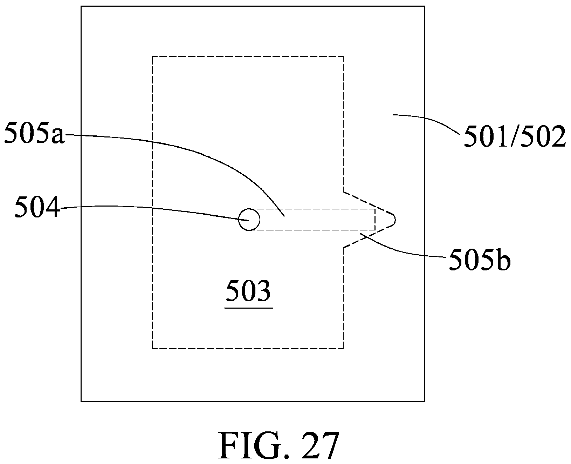

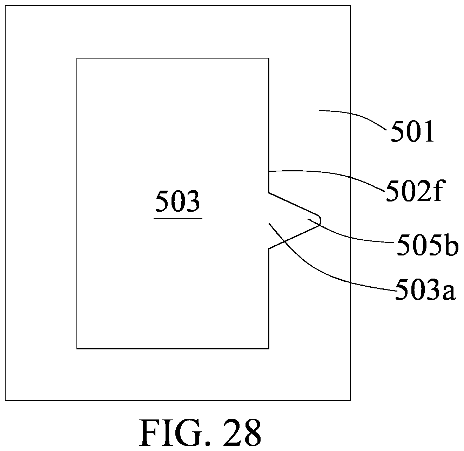

FIG. 24 is a schematic side view of a molding device 1000 according to one embodiment of the present invention, FIG. 25 is a schematic cross-sectional view of the molding device 1000 in a closed configuration, and FIG. 26 is a schematic cross-sectional view of the molding device 1000 in an open configuration. FIG. 27 shows a top view of FIG. 24, and FIG. 28 shows a cross-sectional view along a line AA' of FIG. 25. The molding device 1000 is similar to the molding device 500, 700 or 800 described above and illustrated in FIGS. 7 to 23.

In some embodiments, the passage 505 includes the first portion 505a and the second portion 505b. In some embodiments, the first portion 505a is at the second mold 502, and the second portion 505b is at the first mold 501. The second portion 505b is a recess 501a of the first mold 501 and is recessed into the first mold 501. In some embodiments, the mixture can flow from the feeding port 504 to the mold cavity 503 through the first portion 505a and the second portion 505b.

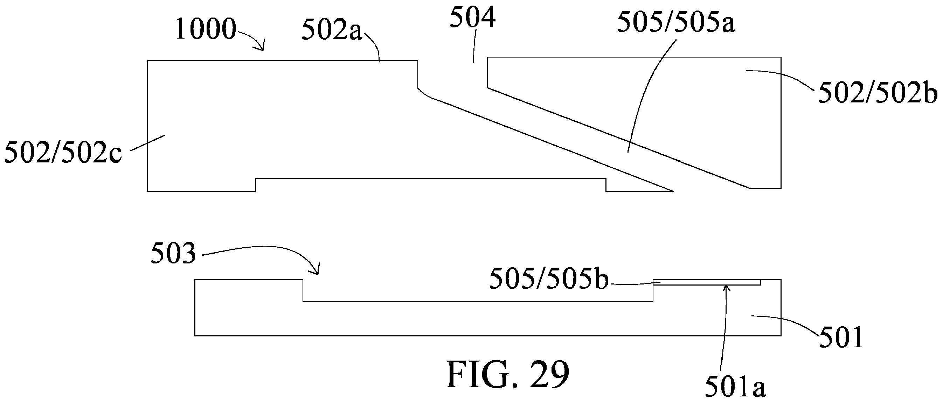

FIG. 29 shows a cross-sectional exploded view of FIG. 25. In some embodiments, the second mold 502 can be separated into several parts when the molding device 1000 is in the open configuration as shown in FIG. 29. In some embodiments, the second mold 502 includes a first part 502b and a second part 502c separable from each other. In some embodiments, the passage 505 is formed when the first part 502b and the second part 502c engaged with each other and when the molding device 1000 is in the closed configuration as shown in FIG. 25.

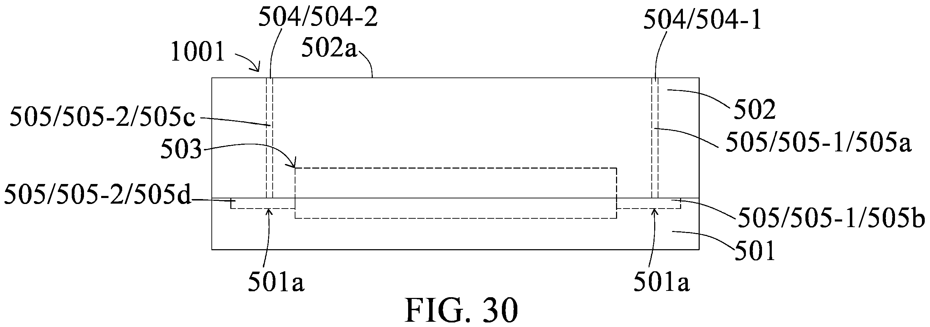

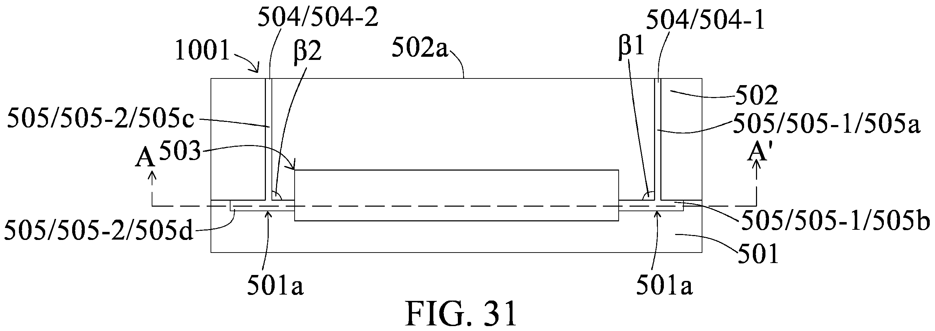

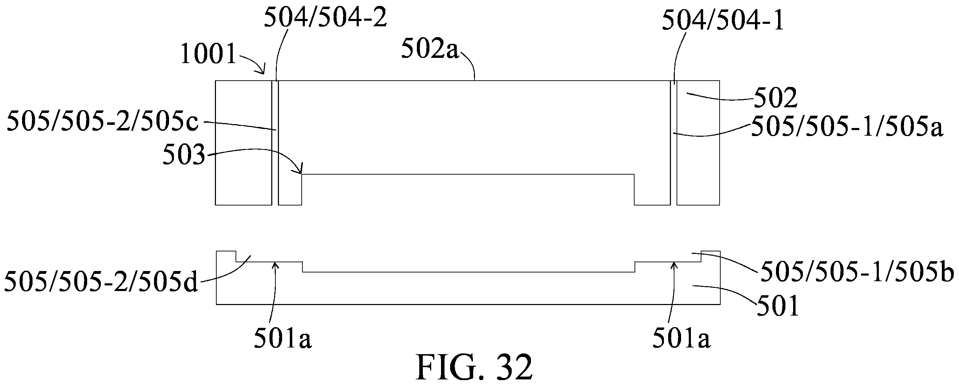

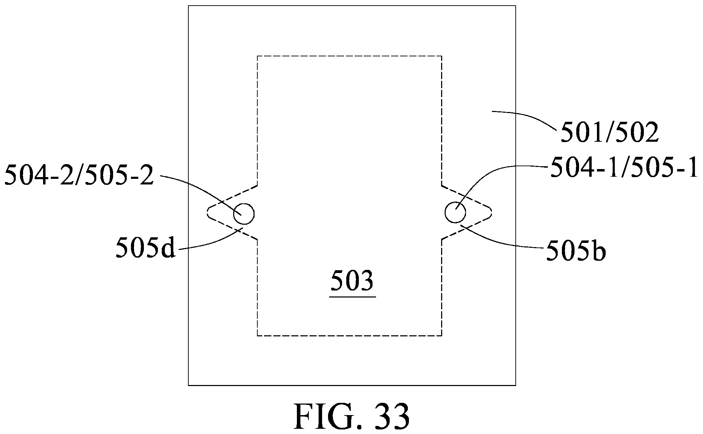

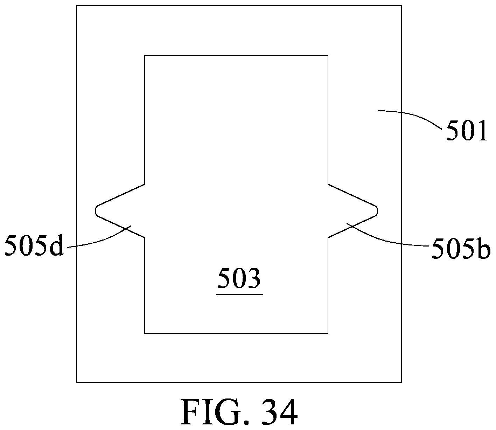

FIG. 30 is a schematic side view of a molding device 1001 according to one embodiment of the present invention, FIG. 31 is a schematic cross-sectional view of the molding device 1001 in a closed configuration, and FIG. 32 is a schematic cross-sectional view of the molding device 1001 in an open configuration. FIG. 33 shows a top view of FIG. 30, and FIG. 34 shows a cross-sectional view along a line AA' of FIG. 30. The molding device 1001 is similar to the molding device 500, 700, 800 or 1000 described above and illustrated in FIGS. 7-29. In some embodiments, the molding device 1001 includes more than one feeding port 504 and more than one passage 505. In some embodiments, the molding device 1001 includes a first passage 505-1 and a second passage 505-2 similar to the first passage 505-1. In some embodiments, the first passage 505-1 is configured symmetrically to the second passage 505-2.

In some embodiments, the first passage 505-1 includes the first portion 505a and the second portion 505b, and the second passage 505-2 includes a third portion 505c and a fourth portion 505d. In some embodiments, the first portion 505a is similar to the third portion 505c, the second portion 505b is similar to the fourth portion 505d. In some embodiments, the first portion 505a and the third portion 505c are at the second mold 502, and the second portion 505c and the fourth portion 505d are at the first mold 501 and are recessed into the first mold 501. The second portion 505c and the fourth portion 505d are recesses 501a of the first mold 501. The first portion 505a and the third portion 505c extend within the first mold 501.

In some embodiments, a third angle β1 between the first portion 505a and the second portion 505b is substantially identical to or is substantially different from a fourth angle β2 between the third portion 505c and the fourth portion 505d. In some embodiments, the third angle β1 and the fourth angle β2 are respectively equal to or less than about 90°. In some embodiments, the first portion 505a is substantially vertical to the second portion 505b, and the third portion 505c is substantially vertical to the fourth portion 505d.

In some embodiments, a first feeding port 504-1 and a second feeding port 504-2 couple to the first passage 505-1 and the second passage 505-2 respectively. In some embodiments, the mixture can flow from the first feeding port 504-1 to the mold cavity 503 through the first portion 505a and the second portion 505b, and/or flow from the second feeding port 504-2 to the mold cavity 503 through the third portion 505c and the fourth portion 505d.

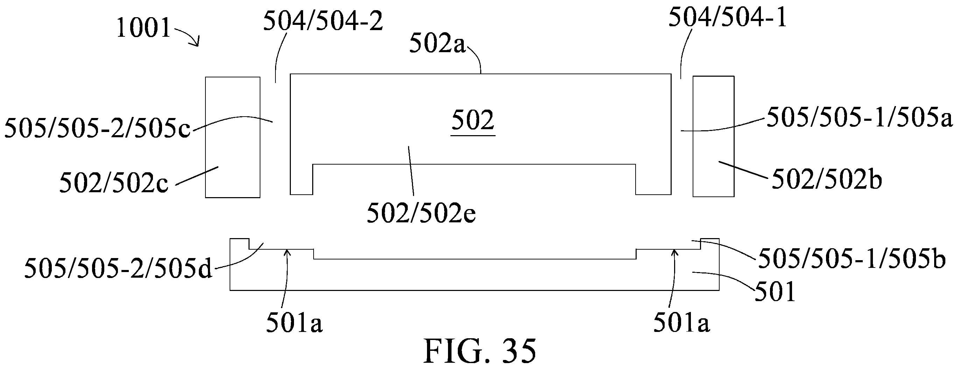

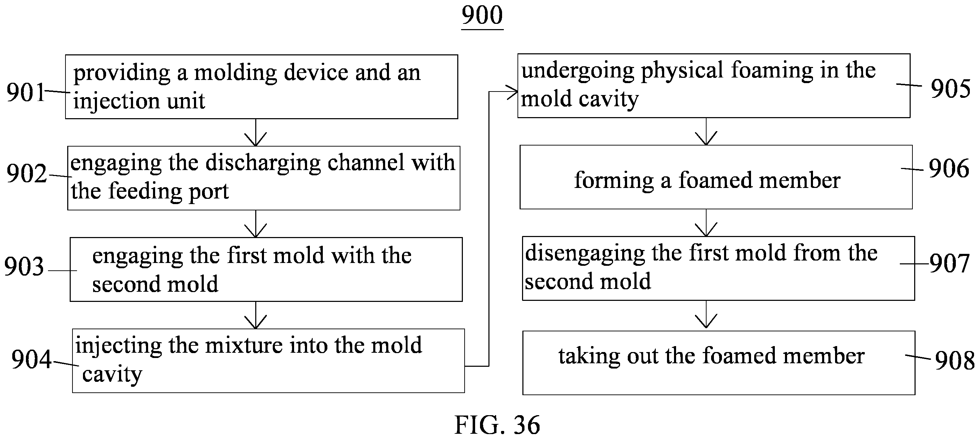

FIG. 35 shows a cross-sectional exploded view of FIG. 30. In some embodiments, the second mold 502 can be separated into several parts when the molding device 1001 is in the open configuration as shown in FIG. 35. In some embodiments, the second mold 502 includes a first part 502b, a second part 502c and a third part 502e. The first part 502b, the second part 502c and the third part 502e are separable from each other. In some embodiments, the first passage 505-1 and the second passage 505-2 are formed when the first part 502b, the second part 502c, the third part 502e and the first mold 501 are engaged with each other and when the molding device 1001 is in the closed configuration as shown in FIG. 35. FIG. 36 is a flow chart illustrating a molding method 900 according to one embodiment of the present invention. In some embodiments, the molding method 900 includes steps 901 to 908.

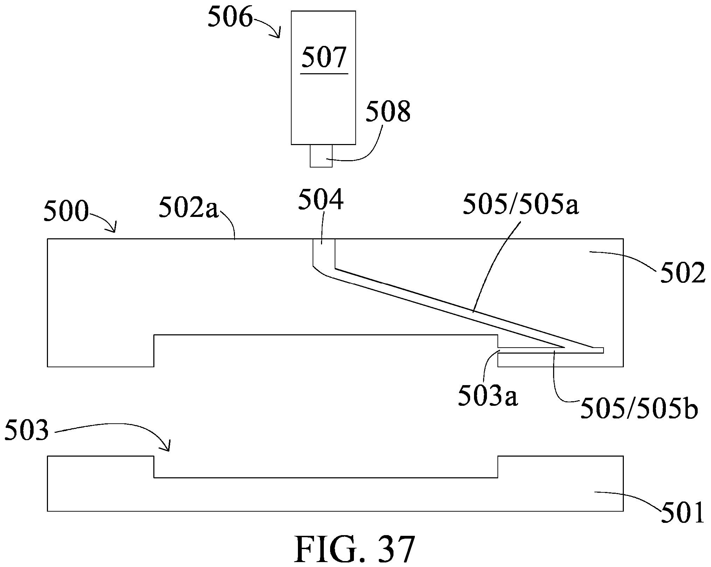

In some embodiments, the molding method 900 includes a step 901 of providing a molding device 500 and an injection unit 506 as shown in FIG. 37. In some embodiments, the injection unit 506 includes an injector 507 for holding and injecting a mixture and a discharging channel 508 for discharging the mixture from the injector 507 out of the injection unit 506. In some embodiments, the molding device 500 is similar to the one described above or illustrated in any one of FIGS. 7-11. In some embodiments, the injection unit 506 is disposed over the molding device 500. The molding device 500 is initially in an open configuration as shown in FIG. 37.

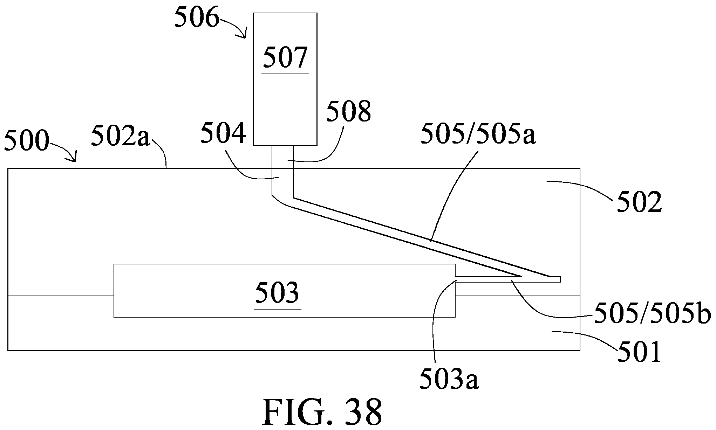

In some embodiments, the molding method 900 includes a step 902 of engaging the discharging channel 508 of the injection unit 506 with the feeding port 504 of the molding device 500, and a step 903 of engaging the first mold 501 with the second mold 502 of the molding device 500 as shown in FIG. 38. In some embodiments, the step 902 is prior to the step 903 or vice versa. In some embodiments, the molding device 500 is in a closed configuration after the engagement of the first mold 501 with the second mold 502. In some embodiments, after the engagement of the first mold 501 with the second mold 502, a mold cavity 503 is formed and is communicable with the passage 505 and the feeding port 504. The mixture can flow from the injection unit 506 into the mold cavity 503 through the feeding port 504 and the passage 505.

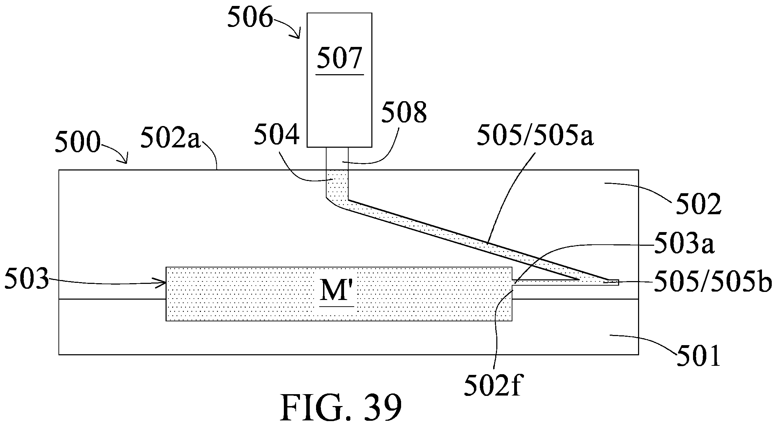

In some embodiments, the molding method 900 includes a step 904 of injecting the mixture M' into the mold cavity 503 as shown in FIG. 39. The mixture M' is injected from the injector 507 into the mold cavity 503 through the discharging channel 508, the feeding port 504 and the passage 505. In some embodiments, the mixture M' sequentially flows from the feeding port 504, a first portion 505a and a second portion 505b of the passage 505 into the mold cavity 503. In some embodiments, the mixture M' enters the molding device 500 through the feeding port 504, and exits the molding device 500 through an opening 503a communicable with the mold cavity 503. In some embodiments, the opening 503a is disposed at an interior sidewall 502f of the second mold 502, and the feeding port 504 is disposed at a top surface 502a of the second mold 502. In some embodiments, the top surface 502a is substantially orthogonal to the interior sidewall 502f.

In some embodiments, after the injection of the mixture M' into the mold cavity 503, the mixture M' undergoes a step 905 of a physical foaming in the mold cavity 503 inside the molding device 500. After the physical foaming of the mixture M', the mixture M' becomes a foamed member M as a step 906. In some embodiments, the foamed member M includes a body portion M1 and a residual portion M2 and M3 protruded from the body portion M1. In some embodiments, a dimension of the body portion M1 substantially corresponds to a dimension of the mold cavity 503, and a dimension of the residual portion M2 and M3 substantially corresponds to a dimension of the passage 505 and a dimension of the feeding port 504. In some embodiments, the residual portion M2 and M3 includes a first residual portion M2 and a second residual portion M3 coupled to the first residual portion M2. In some embodiments, a dimension of the first residual portion M2 substantially corresponds to a dimension of the first portion 505a and the dimension of the feeding port 504, and a dimension of the second residual portion M3 substantially corresponds to a dimension of the second portion 505b.

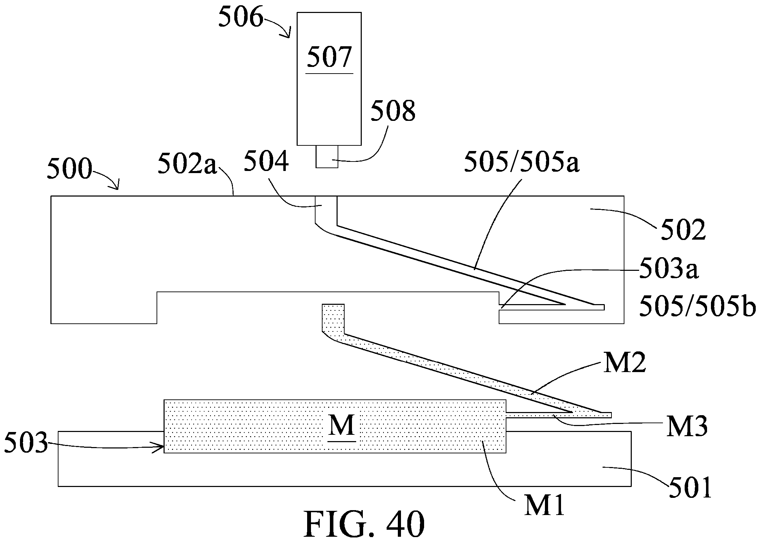

In some embodiments, the molding method 900 includes a step 907 of disengaging the first mold 501 from the second mold 502 after formation of the foamed member M as shown in FIG. 40. The molding device 500 becomes the open configuration as shown in FIG. 40. In some embodiments, the molding method 900 includes a step 908 of taking out the foamed member M from the mold cavity 503 after the disengagement of the first mold 501 from the second mold 502. In some embodiments, the discharging channel 508 is disengaged from the feeding port 504 after the formation of the foamed member M, or upon the molding device 500 is in the open configuration.

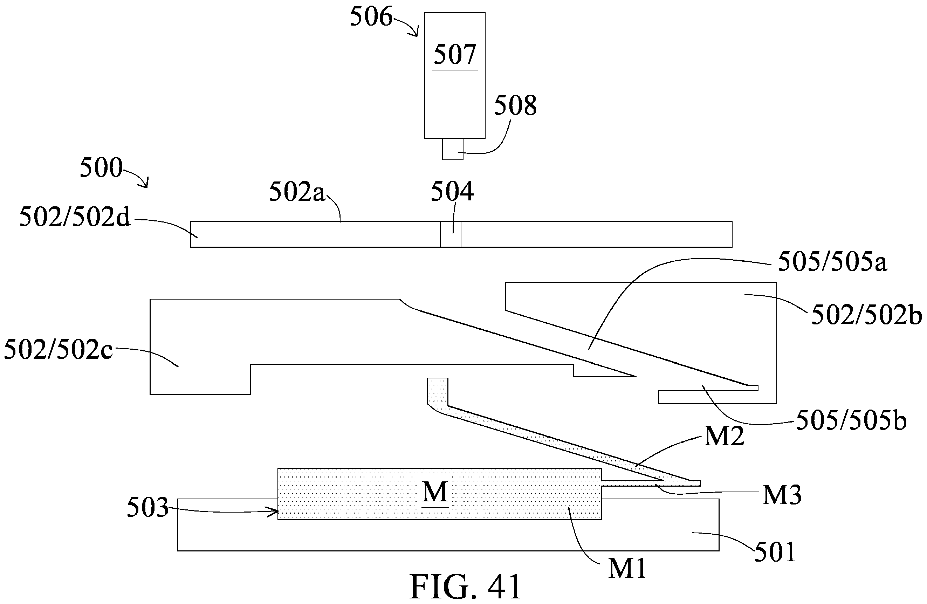

In some embodiments, the second mold 502 of the molding device 500 can be separated into several parts when the molding device 500 is in the open configuration as shown in FIG. 41, similar to the one described above or illustrate in FIG. 12. In some embodiments, the second mold 502 includes a first part 502b, a second part 502c and a third part 502d, similar to the one described above or illustrate in FIG. 12. The first part 502b, the second part 502c and the third part 502d are separable from each other. After the formation of the foamed member M, the molding device 500 is open by disengaging the parts of the molding device 500 from each other and disengaging the first mold 501 from the second mold 502 as shown in FIG. 41. After the opening of the molding device 500, the foamed member M can be readily taken out from the mold cavity 503.

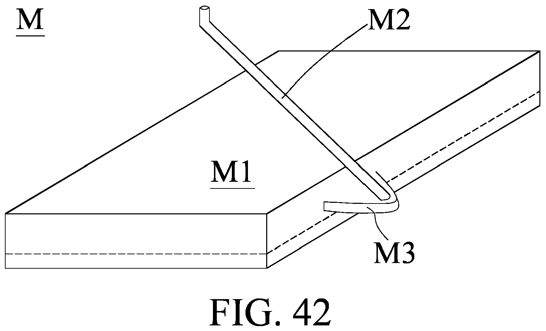

In some embodiments, after the opening of the molding device 500, the foamed member M is taken out as shown in FIG. 42. In some embodiments, the first residual portion M2 and the second residual portion M3 are protruded from the body portion M1. The second residual portion M3 is coupled to the body portion M1, and the residual portion M2 is coupled to the second residual portion M3. In some embodiments, the second residual portion M3 is tapered from the body portion M1 toward an interface between the first residual portion M2 and the second residual portion M3. In some embodiments, the first residual portion M2 is in a strip or elongated shape.

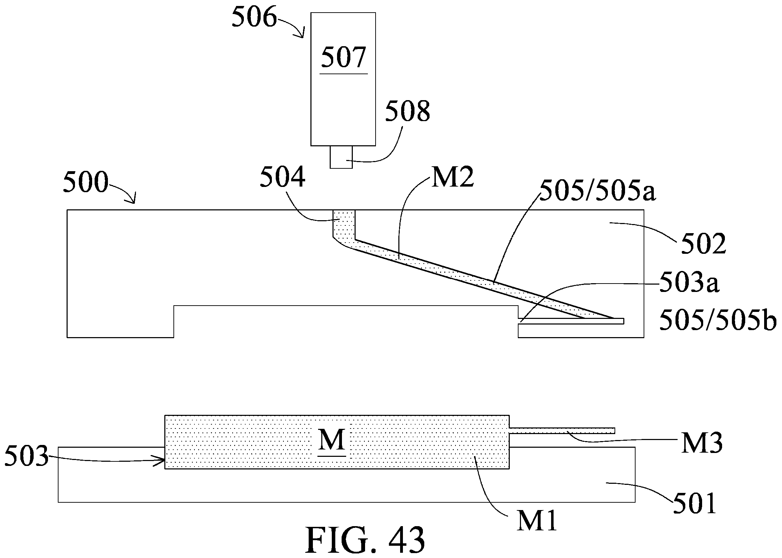

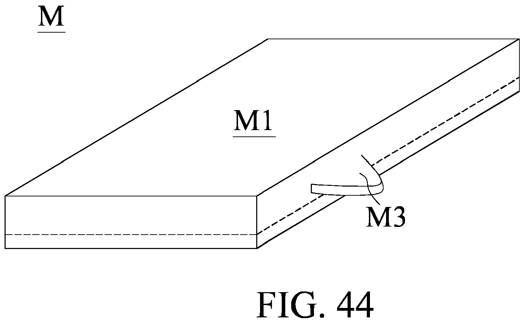

Alternatively, in some embodiments, the first residual portion M2 is separated from the body portion M1 and the second residual portion M3 upon or after the opening of the molding device 500 as shown in FIG. 43. In some embodiments, the first residual portion M2 is separated from the second residual portion M3 upon or after the opening of the molding device 500. In some embodiments, an external force (such as a pulling force for disengaging the first mold 501 from the second mold 502, etc.) is applied to the first residual portion M2 or the second residual portion M3 to separate the first residual portion M2 is separated from the second residual portion M3. As such, when the molding device 500 is open after the formation of the foamed member M, the body portion M1 remains in the mold cavity 503 and remains coupling to the second residual portion M3, while the first residual portion M2 remains at the second mold 502 or in the first portion 505a of the passage 500. In some embodiments, the body portion M1 and the second residual portion M3 can be taken out as shown in FIG. 44.

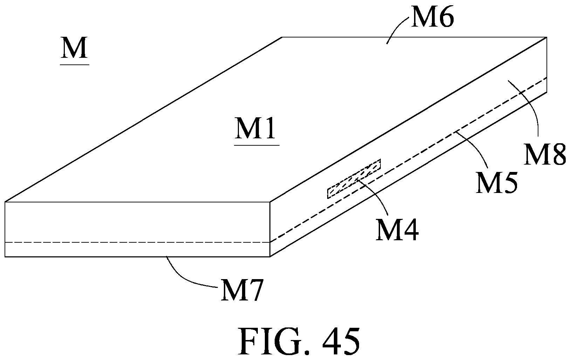

After taking out the foamed member M as shown in FIG. 30 or 32, the residual portion M2 and M3 is removed as shown in FIG. 45. In some embodiments, the residual portion M2 and M3 is removed by cutting, trimming, grinding or any other suitable process. In some embodiments, the second residual portion M3 is removed from the body portion M1, as a result the foamed member M including the body portion M1 is formed as shown in FIG. 45. In some embodiments, after the removal of the second residual portion M3, a trimming trace M4 is formed. In some embodiments, the trimming trace M4 is a region on the body portion M1. In some embodiments, the trimming trace M4 is visible that the trimming trace M4 is visually different from the rest part of the body portion M1 surrounding the trimming trace M4.

In some embodiments, the trimming trace M4 is disposed at a sidewall M8 of the body portion M1 substantially orthogonal to a top surface M6 and a bottom surface M7 of the body portion M1. In some embodiments, the top surface M6 is opposite to the bottom surface M7.

In some embodiments, the rest part of the body portion M1 includes a skin layer, while the trimming trace M4 does not include a skin layer because a skin layer initially present at the trimming trace M4 is damaged or removed by the removal process. In some embodiments, a density of the rest part of the body portion M1 is substantially lower than a density of the trimming trace M4, because the physical foaming is incomplete at the trimming trace M4. In other words, a degree of physical foaming at the trimming trace M4 is less than a degree of physical foaming at the rest part of the body portion M1. In some embodiments, the trimming trace M4 is more capable to absorb liquid (such as water or the like) than the rest part of the body portion M1, because the skin layer at the trimming trace M4 is damaged during cutting process. In some embodiments, the trimming trace M4 is more capable to absorb liquid (such as water or the like) than the top surface M6 and the bottom surface M7 of the body portion M1. In other words, the liquid can easily enter into the body portion M1 through the trimming trace M4, while cannot enter into the body portion M1 through the top surface M6 and the bottom surface M7. In some embodiments, the rest part of the body portion M1 is not liquid absorbable, while the trimming trace M4 is liquid absorbable. In some embodiments, the trimming trace M4 is surrounded by a rest part of the sidewall M8. In some embodiments, the rest part of the sidewall M8 is not liquid absorbable, while the trimming trace M4 is liquid absorbable. In some embodiments, a skin layer is absent from the trimming trace M4, while the skin layer is present over the top surface M6, the bottom surface M7 and the rest part of the sidewall M8 around the trimming trace M4.

In some embodiments, a visible boundary line M5 is formed on the sidewall M8 of the body portion M1 and surrounds the body portion M1. In some embodiments, the visible boundary line M5 is a parting line of the molding device 500 and corresponds to a connection of the first mold 501 and the second mold 502 surrounding the mold cavity 503. In some embodiments, the foamed member M as shown in FIG. 45 is a component of a footwear article, such as an outsole or the like.

Alternatively, in some embodiments, a molding device 800 describe above and illustrated in FIGS. 13-17 is used for implementing the molding method 900, and the foamed member M is taken out from the molding device 800 as shown in FIG. 34 after the opening of the molding device 800. The foamed member M as shown in FIG. 40 is similar to the foamed member M as shown in FIG. 42. In some embodiments, the foamed member M includes two first residual portions M2 and two second residual portion M3 protruded from the body portion M1. In some embodiments, one of the first residual portions M2 and one of the second residual portion M3 coupled to the one of the first residual portions M2 correspond to the first passage 505-1, and another one of the first residual portions M2 and another one of the second residual portion M3 coupled to the another one of the first residual portions M2 correspond to the second passage 505-2.

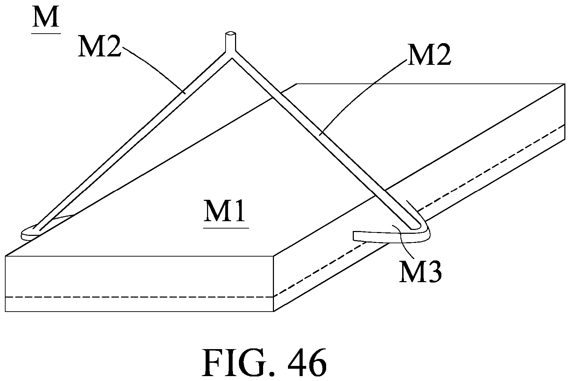

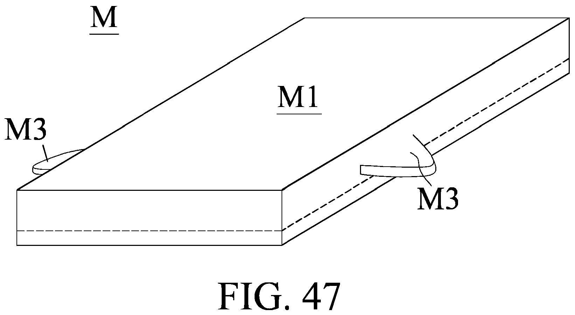

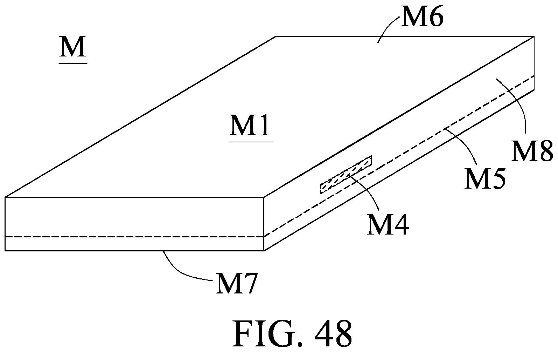

In some embodiments, the first residual portions M2 are separated from the body portion M1 and the second residual portions M3 upon or after the opening of the molding device 800, which is similar to the process as shown in FIG. 43. In some embodiments, the body portion M1 and the second residual portions M3 can be taken out as shown in FIG. 47, which is similar to the foamed member M as shown in FIG. 44. After taking out the foamed member M as shown in FIG. 47 or 46, the residual portions M2 and M3 are removed as shown in FIG. 48, which is similar to the foamed member M shown in FIG. 45 except having two trimming traces M4.

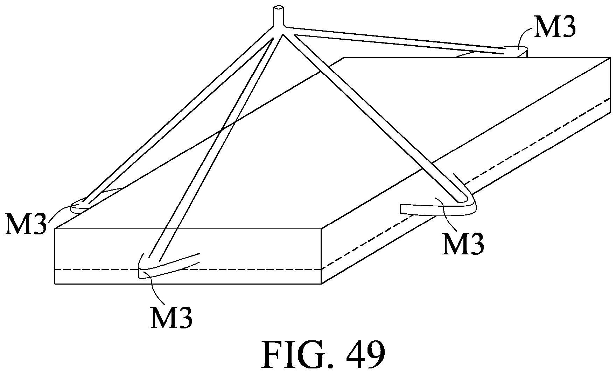

Alternatively, in some embodiments, a molding device 700 describe above and illustrated in FIGS. 19-22 is used for implementing the molding method 700, and the foamed member M is taken out from the molding device 700 as shown in FIG. 49 after the opening of the molding device 700. The foamed member M as shown in FIG. 49 is similar to the foamed member M as shown in FIG. 42. In some embodiments, the foamed member M includes four first residual portions M2 and four second residual portion M3 protruded from the body portion M1. In some embodiments, first one of the first residual portions M2 and first one of the second residual portion M3 coupled to the one of the first residual portions M2 correspond to the first passage 505-1, second one of the first residual portions M2 and second one of the second residual portion M3 coupled to the first one of the first residual portions M2 correspond to the second passage 505-2, third one of the first residual portions M2 and third one of the second residual portion M3 coupled to the third one of the first residual portions M2 correspond to the third passage 505-3, and fourth one of the first residual portions M2 and fourth one of the second residual portion M3 coupled to the fourth one of the first residual portions M2 correspond to the fourth passage 505-4.

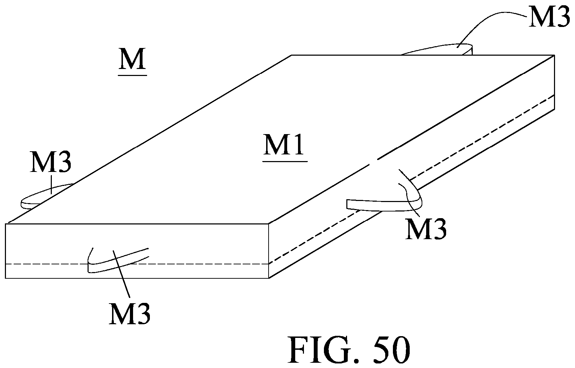

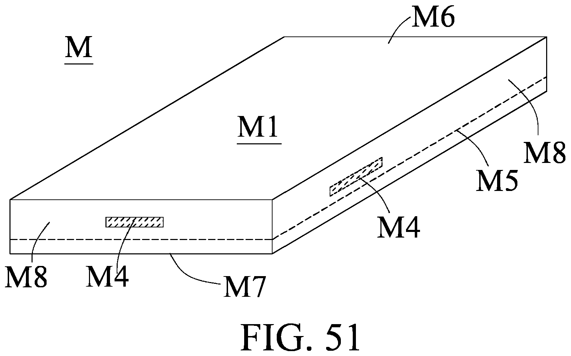

In some embodiments, the first residual portions M2 are separated from the body portion M1 and the second residual portions M3 upon or after the opening of the molding device 700, which is similar to the process as shown in FIG. 43. In some embodiments, the body portion M1 and the second residual portions M3 can be taken out as shown in FIG. 50, which is similar to the foamed member M as shown in FIG. 44. After taking out the foamed member M as shown in FIG. 49 or 50, the residual portions M2 and M3 are removed as shown in FIG. 51, which is similar to the foamed member M shown in FIG. 45, except having four trimming traces M4.

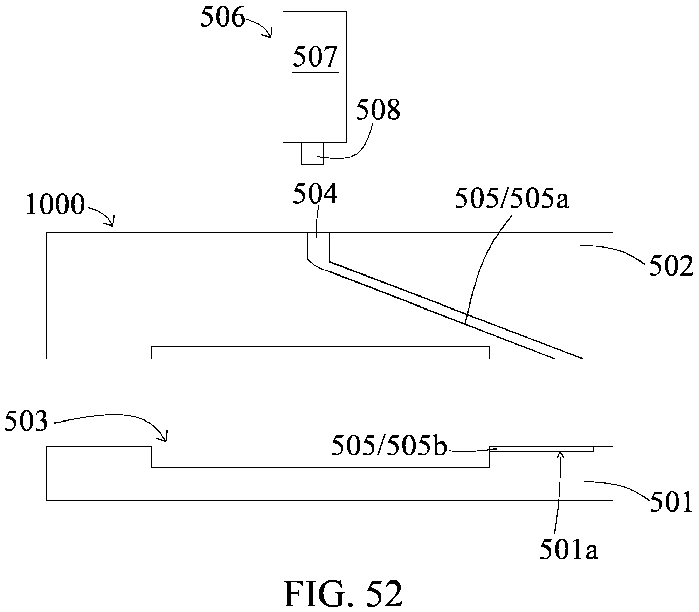

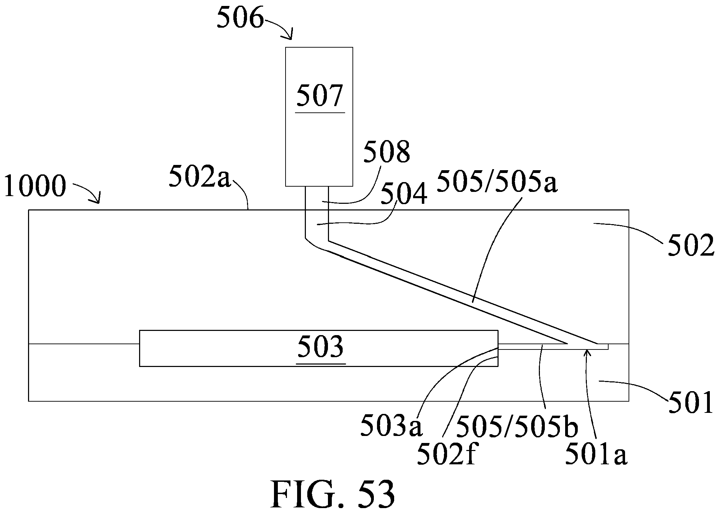

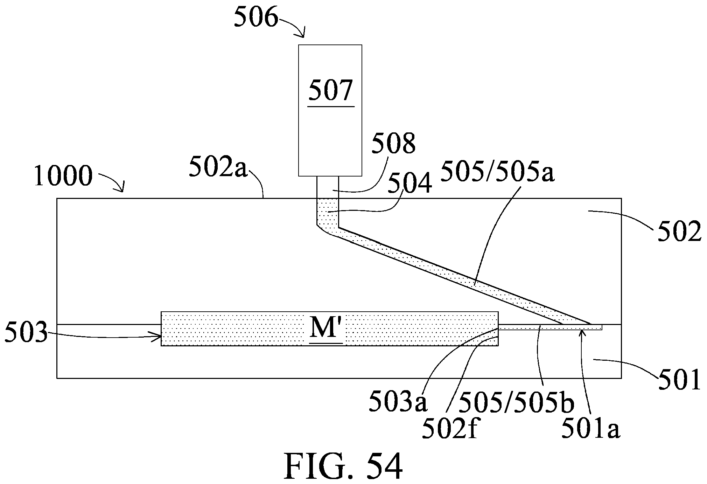

In some embodiments, the molding method 900 is implemented by the molding device 1000 as shown in FIGS. 52 to 55. In some embodiments, the injection unit 506 is disposed over the molding device 1000. The molding device 1000 is initially in an open configuration as shown in FIG. 52. In some embodiments, the discharging channel 508 of the injection unit 506 is engaged with the feeding port 504 of the molding device 1000, and the first mold 501 is engaged with the second mold 502 of the molding device 1000 as shown in FIG. 53. In some embodiments, the mixture M' is injected into the mold cavity 503 as shown in FIG. 54. In some embodiments, after the injection of the mixture M' into the mold cavity 503, the mixture M' undergoes a physical foaming in the mold cavity 503 inside the molding device 1000.

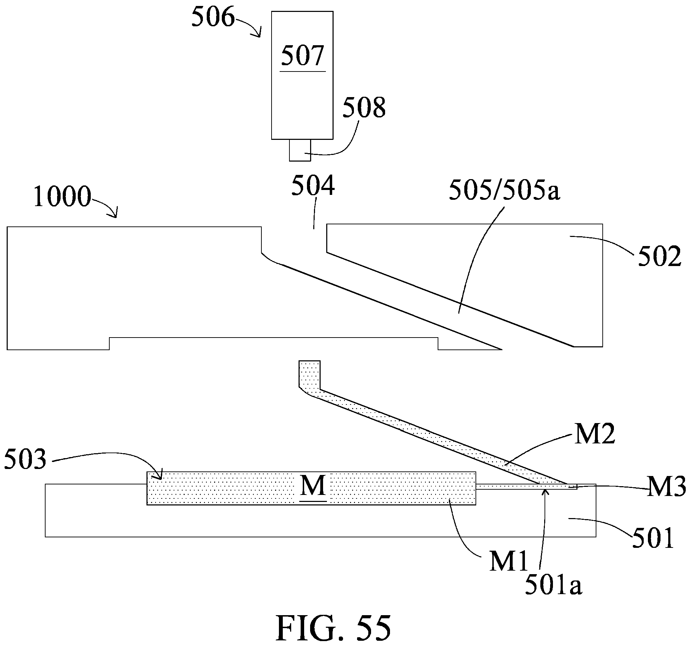

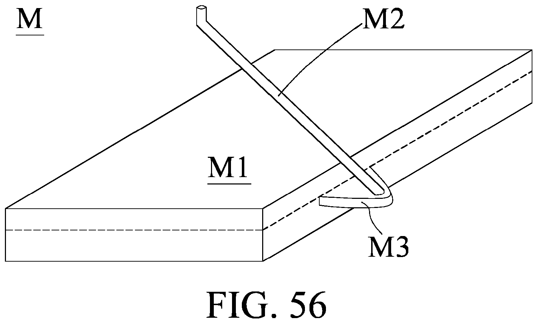

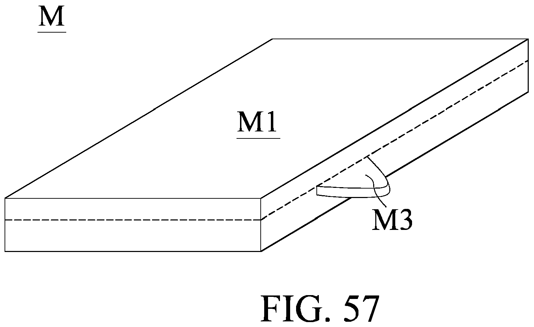

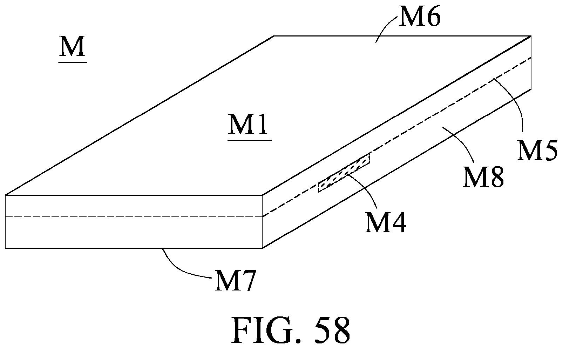

After the physical foaming of the mixture M', the mixture M' becomes a foamed member M as shown in FIG. 55. After the formation of the foamed member M, the molding device 1000 is open by disengaging the parts of the molding device 1000 from each other and disengaging the first mold 501 from the second mold 502 as shown in FIG. 55. After the opening of the molding device 1000, the foamed member M can be readily taken out from the mold cavity 503. The foamed member M as shown in FIG. 56 is similar to the one as shown in FIG. 42. In some embodiments, the residual portions M2 and M3 is removed as shown in FIGS. 57 and 58, similar to the one in FIGS. 44 and 45 respectively. In some embodiments, the visible boundary line M5 is formed on the sidewall M8, and the trimming trace M4 is at or lower than the visible boundary line M5.

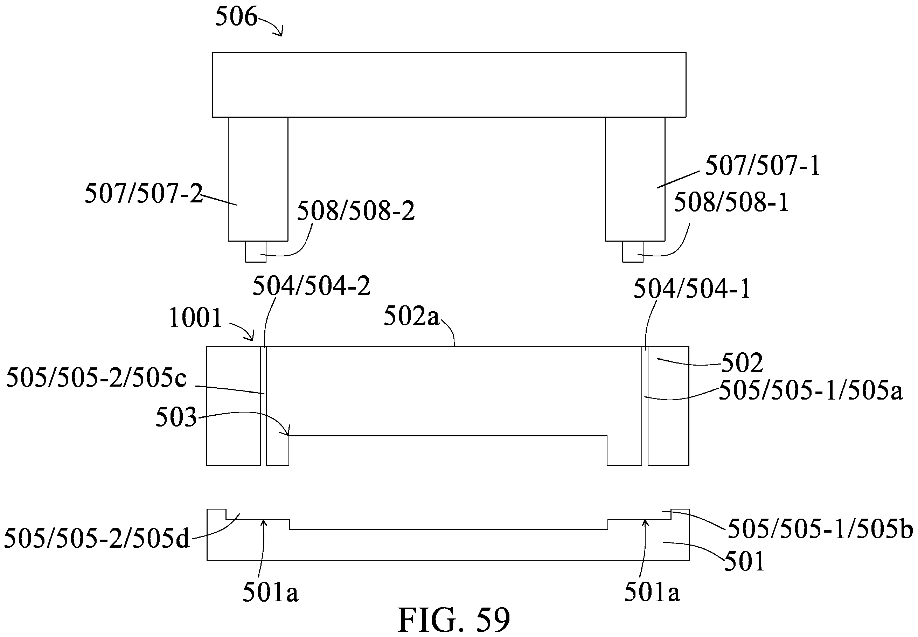

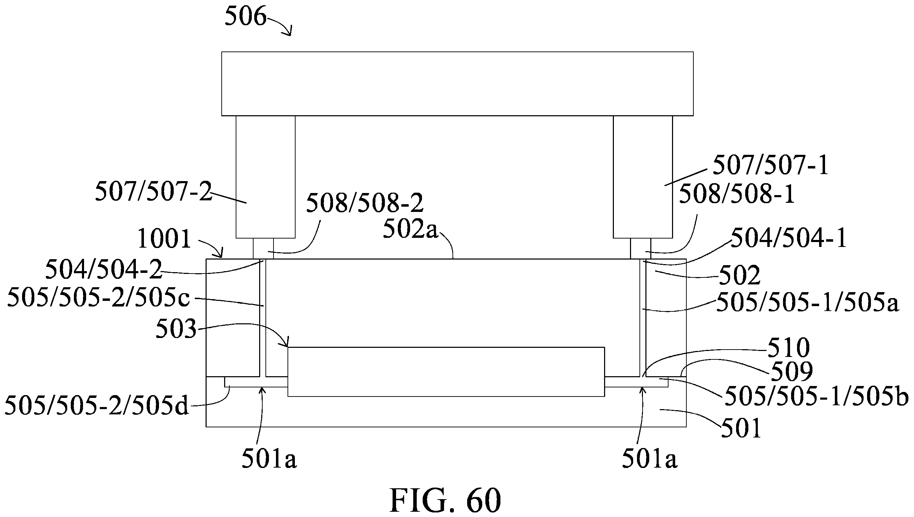

In some embodiments, the molding method 900 is implemented by the molding device 1001 as shown in FIGS. 59 to 62. In some embodiments, the injection unit 506 is disposed over the molding device 1001. The molding device 1001 is initially in an open configuration as shown in FIG. 59. In some embodiments, the discharging channel 508 of the injection unit 506 is engaged with the feeding port 504 of the molding device 1001, and the first mold 501 is engaged with the second mold 502 of the molding device 1001 as shown in FIG. 60. In some embodiments two discharging channels 508-1 and 508-2 are engaged with the feeding ports 504-1 and 504-2 respectively.

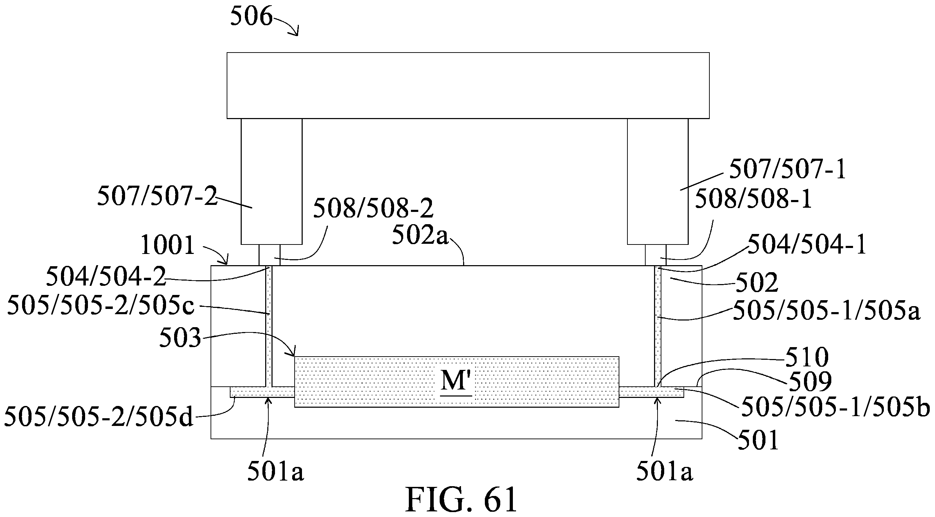

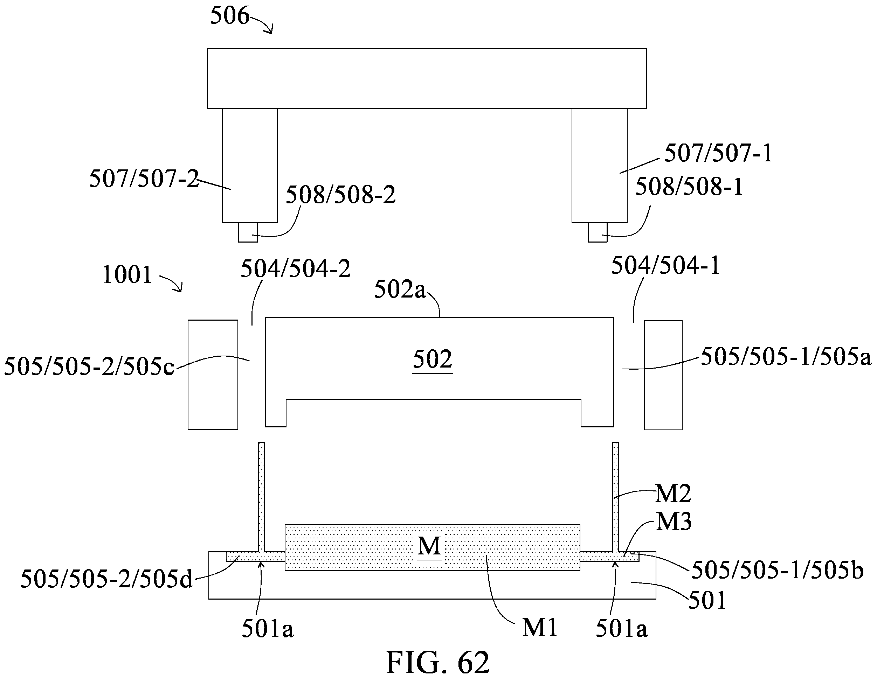

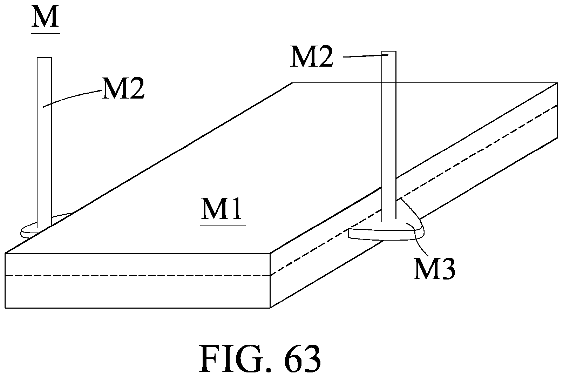

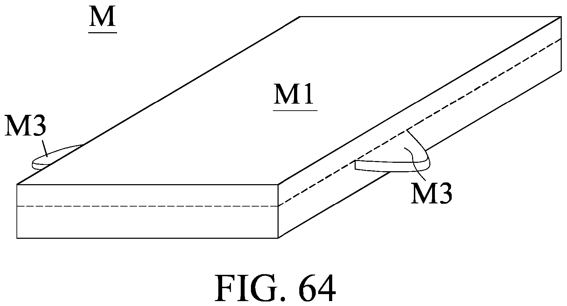

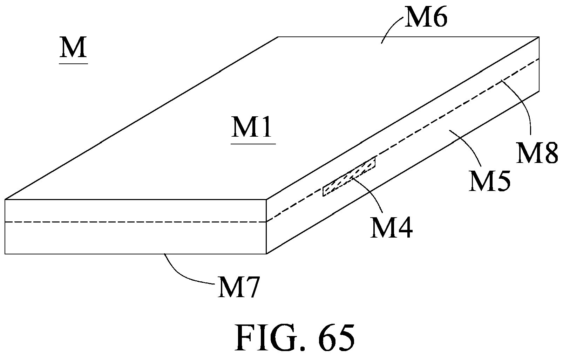

In some embodiments, the mixture M' is injected into the mold cavity 503 as shown in FIG. 61. The mixture M' flows from the discharging channels 508 into mold cavity 503 through the feeding ports 504. In some embodiments, after the injection of the mixture M' into the mold cavity 503, the mixture M' undergoes a physical foaming in the mold cavity 503 inside the molding device 1001. After the physical foaming of the mixture M', the mixture M' becomes a foamed member M as shown in FIG. 62. After the formation of the foamed member M, the molding device 1001 is open by disengaging the parts of the molding device 1001 from each other and disengaging the first mold 501 from the second mold 502 as shown in FIG. 62. After the opening of the molding device 1001, the foamed member M can be readily taken out from the mold cavity 503. The foamed member M as shown in FIG. 63 is similar to the one as shown in FIG. 56. In some embodiments, the residual portions M2 and M3 are removed as shown in FIGS. 64 and 65, similar to the one in FIGS. 57 and 58 respectively. In some embodiments, the visible boundary line M5 is formed on the sidewall M8, and the trimming trace M4 is at or lower than the visible boundary line M5.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein, may be utilized according to the present invention. Accordingly, the appended claims are intended to include within their scope such processes, machines, manufacture, compositions of matter, means, methods and steps.

## Claims

1. A molding device, comprising:
a mold having a mold cavity;
a feeding port extending into the mold;
a passage coupled to the feeding port and communicable with the mold cavity; and
an opening coupled to the passage and communicable with the mold cavity,
wherein the feeding port is disposed above the mold cavity, and the opening is disposed at a side of the mold cavity.

2. The molding device of claim 1, wherein the mold includes a top surface over the mold cavity and an interior sidewall defining the mold cavity, and the feeding port extends from the top surface toward the mold cavity.

3. The molding device of claim 1 or 2, wherein the passage includes a first portion and a second portion coupled to the first portion and disposed under the first portion.

4. The molding device of claim 3, wherein a first angle between the feeding port and the first portion is substantially greater than a second angle between the first portion and the second portion.

5. The molding device of claim 3 or 4, wherein first portion of the passage is substantially orthogonal to the second portion of the passage.

6. A molding method, comprising:
providing a mold having a mold cavity, a feeding port extending into the mold and disposed above the mold cavity, a passage coupled to the feeding port and communicable with the mold cavity, and an opening disposed at a side of the mold cavity, coupled to the passage and communicable with the mold cavity;
injecting a mixture including a polymeric material and a blowing agent into the mold cavity;
forming a foamed member from the mixture by physical foaming; and
taking out the foamed member from the mold cavity,
wherein the mixture flows from the feeding port into the mold cavity through the passage and the opening.

7. The method of claim 6, wherein the passage includes a first portion and a second portion coupled to the first portion, the first portion couples to the feeding port, the second portion couples to the opening, the mixture sequentially flows through the first portion and the second portion, and the passage is formed when the mold is in a closed configuration.

8. The method of claim 7, wherein the mixture flows vertically or slantingly along the first portion of the passage.

9. The method of any one of claims 6 to 8, wherein the foamed member includes a body portion corresponding to the mold cavity, and a residual portion corresponding to the passage and protruded from the body portion.

10. The method of claim 9, further comprising removing the residual portion from the body portion.

11. The method of claim 10, wherein a trimming trace is formed and remained on the body portion after the removal of the residual portion.

12. A foamed member, comprising:
a body portion having a top surface, a bottom surface opposite to the top surface, and a sidewall between the top surface and the bottom surface; and
a trimming trace disposed at the sidewall of the body portion,
wherein the trimming trace is visually different from a rest part of the body portion.

13. The foamed member of claim 12, wherein the trimming trace is liquid absorbable, and the rest part of the body portion is liquid non-absorbable.

14. The foamed member of claim 12 or 13, wherein the trimming trace is absent from the top surface and the bottom surface, a skin layer is absent from the trimming trace, and the skin layer is present at the top surface, the bottom surface and a rest part of the sidewall around the trimming trace.

15. The foamed member of any one of claims 12 to 14, wherein a density of the rest part of the body portion is substantially lower than a density of the trimming trace.
